# EUROPÄISCHE PATENTSCHRIFT

(11) **EP 3 016 494 B1**
(45) Veröffentlichungstag und Bekanntmachung des Hinweises auf die Patenterteilung: **22.05.2019**
(21) Anmeldenummer: 14732573.2
(22) Anmeldetag: 25.06.2014
(51) Int. Cl.: A01D 34/835, A01D 45/02

(54) **LANDWIRTSCHAFTLICHES GERÄT UND VERFAHREN ZUR BEARBEITUNG VON PFLANZENSTOPPELN**
AGRICULTURAL IMPLEMENT AND METHOD FOR PROCESSING PLANT STUBBLE
APPAREIL AGRICOLE ET PROCÉDÉ DE TRAITEMENT DE CHAUMES VÉGÉTAUX

(30) Priorität: 05.07.2013 DE 102013011272; 09.12.2013 DE 202013105582 U
(43) Veröffentlichungstag der Anmeldung: 11.05.2016
(73) Patentinhaber: Baß Antriebstechnik GmbH, 91607 Gebsattel (DE)
(72) Erfinder: NASER, Walter, 91592 Buch am Wald (DE)
(74) Vertreter: Söltenfuss, Dirk Christian
(86) Internationale Anmeldenummer: PCT/EP2014/063429
(87) Internationale Veröffentlichungsnummer: WO 2015/000768

(56) Entgegenhaltungen:
- DE-A1- 2 011 976
- DE-A1- 3 727 535
- DE-B4-102004 020 447

## Beschreibung

Die Erfindung betrifft ein landwirtschaftliches Gerät mit wenigstens einer Vorrichtung zur Bearbeitung von Pflanzenstoppeln sowie ein Verfahren zur Bearbeitung von Pflanzenstoppeln.

In der Landwirtschaft bleiben bei der Pflanzenernte in der Regel Pflanzenstoppeln, d.h. abgeschnittene Pflanzenstängel mit einer gewissen Restlänge auf dem Feld stehen. Auf diesen Pflanzenstoppeln können sich Schädlinge niederlassen und vermehren. Dies gilt insbesondere auch für den Maiszünsler (Ostrinia nubilalis), dessen Raupen sich in Maisstängel fressen und dessen Puppen dann in den Maisstoppeln überwintern und im Frühjahr die nächste Generation von Faltern hervorbringen. Der Maiszünsler schädigt insbesondere die Pflanzenstängel, aber auch die Maiskolben, wobei sich der Befall zunehmend verstärkt und ausweitet. Neben dem Schädlingsbefall ist auch die Verbreitung von Pilzen (z.B. Fusarien) auf/an den Pflanzenresten zu beachten.

Es besteht daher Bedarf, wirksame Bekämpfungsmethoden gegen den Maiszünsler und ähnliche Schädlinge bereitzustellen. Man unterscheidet hier üblicherweise zwischen dem Einsatz chemischer und biologischer Pflanzenschutzmittel (diverse Insektizide, Pestizide, etc.), biologischen Verfahren (z.B. Ausbringen von Wespen(eiern) als natürlicher Gegenspieler der Schädlinge (vgl. z.B. DE 93 01 465 U1), einer thermischen Behandlung der Maisstoppeln (vgl. z.B. DE 10 2007 043 326 A1) und ackerbaulichen Maßnahmen. Für den Einsatz von Pflanzenschutzmitteln und biologischen Verfahren stehen für die wirksame Bekämpfung des Maiszünslers wegen seines Lebenszyklus nur schmale Zeitfenster zu Verfügung und sind wegen des hohen Maisstandes in diesem Zeitfenster Spezialtechniken erforderlich.

Es ist bekannt, dass die Puppen des Maiszünslers in den Maisstoppeln überwintern, weshalb versucht wird, diesen Lebensraum der Schädlinge gezielt einzuschränken oder zu zerstören. Zu den geeigneten ackerbaulichen Maßnahmen zählen deshalb insbesondere ein möglichst kurzes Abschneiden der Maisstängel bei oder nach der Ernte, ein Zerkleinern / Zerstören der Maisstoppeln sowie ein Einarbeiten / Unterpflügen der Maisstoppel(reste) in den Boden. In der Landwirtschaft werden hierfür zum Beispiel spezielle Mulcher, Eggen, Walzen und Pflüge eingesetzt.

So offenbart die DE 20 2009 016 468 U1 eine landwirtschaftliche Maschine mit einem Anbaugerät zum Aufnehmen und Sammeln von Maisstoppeln aus der Erde, einem Häcksler zum Zerkleinern der aufgenommenen Pflanzenteile, einer Vorrichtung zum Zerstreuen der gehäckselten Pflanzenteile und ggf. einer Scheibenegge zum Einarbeiten des verteilten, gehäckselten Gutes in den Erdboden. Das Anbaugerät weist zwei Scheiben auf, die schräg zueinander auf einer gemeinsamen, im Wesentlichen horizontal verlaufenden Antriebswelle angebracht sind, um beim Drehen die Maisstoppeln und Wurzelstöcke zwischen sich zu klemmen und aus der Erde aufzunehmen.

Die DE 10 2004 020 447 B4 beschreibt einen Feldhäcksler zum Ernten von beispielsweise Mais. Der Feldhäcksler weist ein Vorsatzgerät zum Erfassen und Abschneiden des Erntegutes, eine Häckseleinrichtung, der die abgeschnittenen Pflanzenhalme zugeführt werden, und eine Zerschneid- und/oder Zerkleinerungseinrichtung auf. Die Zerschneid- und/oder Zerkleinerungseinrichtung ist dem Vorsatzgerät nachgeordnet und dient zur nahezu restlosen, mechanischen Zerkleinerung der Pflanzenstoppeln oder Erntegutreste, bevor die Pflanzenstoppeln von den Rädern der Maschine überfahren werden. Mit der Zerschneid- und/oder Zerkleinerungseinrichtung können die Pflanzenstoppeln zerschnitten, zerschlagen oder zerfasert werden.

Aus der DE 20 2011 003 182 U1 ist eine Bodenbearbeitungsmaschine zur pfluglosen Bodenbearbeitung bekannt, welche beispielsweise zur ganzflächigen flachen Bodenbearbeitung abgeernteter Maisäcker eingesetzt werden kann. Die Bodenbearbeitungsmaschine weist zu diesem Zweck mehrere Arbeitswerkzeuge in Form von Schaufelmessern auf, die an Kreiseln angebracht sind, die um im Wesentlichen vertikale Drehachsen rotieren. Eine Bearbeitung von Pflanzenstoppeln ist mit dieser Maschine nicht vorgesehen.

Ergänzend sei auch auf die DE 10 2010 012 686 A1 verwiesen, welche eine Vorrichtung zum Aufrichten von Halmgut wie beispielsweise Maisstoppeln beschreibt, um das aufgerichtete Haimgut anschließend zum Beispiel mit den oben beschriebenen Maßnahmen und Vorrichtungen besser bearbeiten zu können.

In diesem Zusammenhang ist schließlich auch die DE 37 27 535 A1 zu nennen, die eine Pflückvorrichtung zum Ernten von Halmfrüchten, insbesondere Mais offenbart. Diese Pflückvorrichtung weist einen unterhalb eines Pflückers angeordneten Stangenhäcksler zum Zerkleinern und Breitstreuen der Stängel auf, welcher um eine vertikale Achse rotierende Messer und mindestens ein diese teilweise umgebendes Leitblech aufweist.

Es ist die Aufgabe der Erfindung, ein verbessertes landwirtschaftliches Gerät und ein verbessertes Verfahren zum Bearbeiten von Pflanzenstoppeln zu schaffen, mit denen eine einfache und wirkungsvolle Schädlings- und Pilzbekämpfung möglich ist.

Diese Aufgabe wird gelöst durch die Lehre der unabhängigen Ansprüche. Besonders bevorzugte Ausgestaltungen und Weiterbildungen der Erfindung sind Gegenstand der abhängigen Ansprüche.

Das landwirtschaftliche Gerät weist wenigstens eine Vorrichtung zur Bearbeitung von Pflanzenstoppeln auf, wobei diese Pflanzenstoppelbearbeitungsvorrichtung erfindungsgemäß aufweist: einen Rotationskörper, welcher um eine Drehachse drehbar ist und eine umlaufende Mantelfläche aufweist, wobei die Drehachse des Rotationskörpers in einem vorbestimmten Winkel zur horizontalen Ebene verläuft, sowie einen Gegenkörper mit einer Gegenfläche, welche der Mantelfläche des Rotationskörpers in einem vorbestimmten horizontalen Abstand gegenüber positioniert ist, wobei der vorbestimmte horizontale Abstand kleiner bemessen ist als ein Durchmesser der zu bearbeitenden Pflanzenstoppeln, sodass die zu bearbeitenden Pflanzenstoppeln zwischen der Mantelfläche des sich drehenden Rotationskörpers und der Gegenfläche des Gegenkörpers aufgenommen und um ihre Längsachse verdreht werden.

Bei diesem landwirtschaftlichen Gerät ist die wenigstens eine Pflanzenstoppelbearbeitungsvorrichtung derart ausgestaltet, dass die Pflanzenstoppeln zwischen der Mantelfläche des sich drehenden Rotationskörpers und der Gegenfläche des Gegenkörpers aufgenommen und verdreht und bevorzugt auch gequetscht werden, so dass sie zerstört und ggf. auch aus der Erde gezogen werden. Die Pflanzenstoppeln werden aufgrund des gewählten horizontalen Abstandes zwischen Mantelfläche und Gegenfläche zwischen diesen Flächen geklemmt und durch die Drehung der Mantelfläche und die so bewirkte Relativdrehung gegenüber der Gegenfläche verdreht. Da die Drehachse des Rotationskörpers in einem vorbestimmten Winkel zur horizontalen Ebene verläuft, werden die Pflanzenstoppeln um ihre Längsachse verdreht und so effektiv zerstört. Das Zusammenspiel des sich drehenden Rotationskörpers und dem durch den Abstand zwischen Mantelfläche des Rotationskörpers und Gegenfläche gebildeten Spalt bewirkt ein sehr effektives Quetschen und Verdrehen der Pflanzenstoppeln, wodurch diese aufspleißen / aufreißen / zerfasern und nach Möglichkeit auch aus dem Wurzelstock oder mit dem Wurzelstock (bzw. mit Teilen des Wurzelstocks) aus dem Boden heraus gerissen bzw. gezogen werden. Das Gerät bzw. seine wenigstens eine Pflanzenstoppelbearbeitungsvorrichtung sind relativ einfach aufgebaut und ermöglichen auf einfache Weise ein wirkungsvolles Zerstören der Pflanzenstoppeln auf einem Feld. Durch die so entstandene Beschädigung der Pflanzenstoppeln verrottet zudem die organische Masse schneller. Der Lebensraum von Schädlingen und Pilzen auf solchen Pflanzenstoppeln, wie beispielsweise der Puppen des Maiszünslers, wird effektiv zerstört oder zumindest stark eingeschränkt.

Der Begriff "Pflanzenstoppel" soll in Zusammenhang mit der vorliegenden Erfindung sowohl Pflanzenstoppel im herkömmlichen Sinn, d.h. die auf dem Feld verbleibenden Reste von abgeschnittenen Pflanzenstängeln, als auch komplette, d.h. nicht abgeschnittene Pflanzenstängel und dabei insbesondere deren untere bzw. bodennahe Bereiche umfassen. Demgemäß kann das landwirtschaftliche Gerät der Erfindung zur Bearbeitung von Pflanzenstoppeln nach einem Erntevorgang, im Wesentlichen zeitgleich mit einem Erntevorgang oder vor einem (eigentlichen oder anderen) Erntevorgang von zum Beispiel Maispflanzen eingesetzt werden.

Die Orientierungen "vertikal" und "horizontal" beziehen sich in diesem Zusammenhang jeweils auf einen Nutzungszustand des landwirtschaftlichen Gerätes, wobei der (Erd- )Boden als Referenz eine horizontale Ebene definiert. Die in einem vorbestimmten Winkel zur horizontalen Ebene verlaufende Drehachse verläuft vorzugsweise in einem Winkelbereich von etwa 30° bis 90° (jeweils einschließlich) zur horizontalen Ebene. Vorzugsweise beträgt der Anstellwinkel der Drehachse zur horizontalen Ebene wenigstens etwa 30°, bevorzugter wenigstens etwa 45°, 60°, 70°, 75°, 80° oder 85°. Außerdem beträgt der Anstellwinkel der Drehachse zur horizontalen Ebene vorzugsweise etwa 90° (d.h. vertikale Ausrichtung) oder höchstens etwa 85°, 80° oder 75°. Die Drehachse ist dabei in Arbeitsrichtung des Gerätes und/oder quer zur Arbeitsrichtung des Gerätes zur horizontalen Ebene in einem vorbestimmten Winkel angestellt. Im Fall einer Anstellung längs und quer zur Arbeitsrichtung des Gerätes können die vorbestimmten Winkel im Wesentlichen gleich zueinander oder unterschiedlich sein. Die hier angegebenen Winkelgrößen bezeichnen jeweils die betragsmäßige Größe. Der vorbestimmte Winkel der Drehachse des Rotationskörpers wird vorzugsweise an die jeweils zu bearbeitenden Pflanzenstoppeln angepasst, bevorzugt ist die Winkelstellung der Drehachse variabel einstellbar.

Der Begriff "Rotationskörper" soll in diesem Zusammenhang jede Art von Einheit umfassen, die ein oder mehr Rotationselemente, die jeweils um eine Drehachse drehbar gelagert sind, und eine umlaufende Mantelfläche, die im Wesentlichen parallel zu der Drehachse bzw. den Drehachsen ausgerichtet ist, aufweist. Der Begriff "Rotationselement" soll in diesem Zusammenhang jeden massiven oder zumindest teilweise hohlen Gegenstand bezeichnen, der vorzugsweise im Wesentlichen rotationssymmetrisch zu seiner Drehachse ausgestaltet ist. Geeignete Rotationselemente haben vorzugsweise die Form eines Rades, einer Rolle, einer Kugel, einer Kugelscheibe, eines Kegels, eines Kegelstumpfes oder dergleichen. Im Fall von mehreren Rotationselementen verlaufen deren Drehachsen vorzugsweise im Wesentlichen parallel zueinander. Die "Mantelfläche" des Rotationskörpers ist definiert als eine um das wenigstens eine Rotationselement des Rotationskörpers umlaufende Fläche des Rotationskörpers. Die zu bearbeitenden Pflanzenstoppeln kommen mit der Mantelfläche des Rotationskörpers in Kontakt. Im Fall eines Rotationskörpers mit nur einem Rotationselement ist die Mantelfläche vorzugsweise die Oberfläche des Rotationselements selbst oder eine Beschichtung, ein Belag oder dergleichen auf dieser Oberfläche. Im Fall eines Rotationskörpers mit zwei oder mehr nebeneinander angeordneten Rotationselementen ist die Mantelfläche des Rotationskörpers vorzugsweise durch ein Mantelelement gebildet, das alle Rotationselement umgreift. Geeignete Mantelelemente sind vorzugsweise in der Art eines Bandes, eines Riemens, einer Kette oder dergleichen ausgestaltet. Im Fall eines Rotationskörpers mit zwei oder mehr Rotationselementen sind diese im Wesentlichen gleich oder unterschiedlich zueinander ausgestaltet und/oder dimensioniert. Die Mantelfläche des Rotationskörpers erstreckt sich vollständig oder nur teilweise über dessen Höhe bzw. die Höhe seines wenigstens einen Rotationselements parallel zur Drehachse oder sogar darüber hinaus. Der Rotationskörper hat vorzugsweise eine, zwei oder auch mehr solcher Mantelflächen. Die Mantelfläche ist vorzugsweise vollständig um den gesamten Umfang des Rotationskörpers umlaufend ausgebildet, bevorzugt allenfalls mit kleinen Unterbrechungen (Abschnitten mit einem kleineren Durchmessermaß). Die Mantelfläche des Rotationskörpers ist vorzugsweise ganz oder teilweise im Wesentlichen starr oder elastisch / nachgiebig / verformbar ausgebildet. Die Mantelfläche des Rotationskörpers erstreckt sich - insbesondere je nach Gestalt des Rotationskörpers bzw. seines wenigstens einen Rotationselements - im Wesentlichen parallel zur Drehachse oder in einem Winkel zu dieser. Insgesamt verläuft die Mantelfläche des Rotationskörpers in einem vorbestimmten Winkel zur horizontalen Ebene in einem Bereich von vorzugsweise etwa 30° bis 90°. Vorzugsweise beträgt der Anstellwinkel der Mantelfläche zur horizontalen Ebene wenigstens etwa 30°, bevorzugter wenigstens etwa 45°, 60°, 70°, 75°, 80° oder 85° und/oder etwa 90° (d.h. vertikale Ausrichtung) oder höchstens etwa 85°, 80° oder 75°. Die hier angegebenen Winkelgrößen bezeichnen jeweils die betragsmäßige Größe. Der vorbestimmte Winkel der Mantelfläche des Rotationskörpers wird vorzugsweise an die jeweils zu bearbeitenden Pflanzenstoppeln angepasst.

Unter einem "Gegenkörper" soll in diesem Zusammenhang jede Art eines massiven oder zumindest teilweise hohlen Gegenstandes bezeichnet werden, der eine als "Gegenfläche" bezeichnete Außenfläche besitzt, welche der Mantelfläche des Rotationskörpers gegenüber positioniert ist. Die Gegenfläche ist vorzugsweise die Oberfläche des zentralen Körpers des Gegenkörpers selbst oder eine Beschichtung, ein Belag oder dergleichen auf dieser Oberfläche. Der Gegenkörper hat grundsätzlich eine beliebige Gestalt, bevorzugt hat er im Wesentlichen die Form einer Platte oder Leiste (geradlinig oder gebogen) oder eines Rotationskörpers (z.B. Rad, Rolle, Kugel, Kugelscheibe, Kegel, Kegelstumpf, etc.). Die Gegenfläche des Gegenkörpers kommt, wie die Mantelfläche des Rotationskörpers, mit den Pflanzenstoppeln in Kontakt. Die Gegenfläche des Gegenkörpers ist vorzugsweise ganz oder teilweise im Wesentlichen starr oder elastisch / nachgiebig / verformbar ausgebildet. Die Gegenfläche des Gegenkörpers erstreckt sich - insbesondere je nach Gestalt des Gegenkörpers und des Rotationskörpers - im Wesentlichen parallel zur Mantelfläche des Rotationskörpers oder in einem Winkel von maximal etwa ±45°, ±30°, ±20°, ±15° oder ±10° zu dieser. Insgesamt verläuft auch die Gegenfläche des Gegenkörpers in einem vorbestimmten Winkel zur horizontalen Ebene in einem Bereich von vorzugsweise etwa 30° bis 90°. Vorzugsweise beträgt der Anstellwinkel der Gegenfläche zur horizontalen Ebene wenigstens etwa 30°, bevorzugter wenigstens etwa 45°, 60°, 70°, 75°, 80° oder 85° und/oder etwa 90° (d.h. vertikale Ausrichtung) oder höchstens etwa 85°, 80° oder 75°. Die hier angegebenen Winkelgrößen bezeichnen jeweils die betragsmäßige Größe. Der vorbestimmte Winkel der Gegenfläche des Gegenkörpers wird vorzugsweise an die jeweils zu bearbeitenden Pflanzenstoppeln angepasst.

Der horizontale Abstand, d.h. der Abstand in horizontaler Richtung, zwischen der Gegenfläche des Gegenkörpers und der Mantelfläche des Rotationskörpers ist in horizontaler Richtung über einen Zusammenwirkbereich der beiden Flächen hinweg im Wesentlichen konstant, variabel, in Arbeitsrichtung des Gerätes kontinuierlich kleiner werdend oder in Arbeitsrichtung des Gerätes kontinuierlich größer werdend. Außerdem sind grundsätzlich auch Unterbrechungen der Gegenfläche bzw. des Gegenkörpers, d.h. zum Beispiel auch mehrere zueinander beabstandete Gegenkörper mit Gegenflächen denkbar. Der horizontale Abstand zwischen der Gegenfläche des Gegenkörpers und der Mantelfläche des Rotationskörpers ist in vertikaler Richtung über einen Zusammenwirkbereich der beiden Flächen hinweg im Wesentlichen konstant, variabel, nach unten kontinuierlich kleiner werdend oder nach unten kontinuierlich größer werdend. Der horizontale Abstand zwischen Mantelfläche und Gegenfläche ist auf den (durchschnittlichen, minimalen, maximalen) Durchmesser der jeweils zu bearbeitenden Pflanzenstoppeln abgestimmt. Dabei ist der Abstand vorzugsweise um wenigstens 2%, 3%, 5%, 7%, 10% oder 15% oder vorzugsweise wenigstens 1 mm, 2 mm, 5 mm oder 10 mm kleiner bemessen als der Durchmesser der zu bearbeitenden Pflanzenstoppeln, bei sich veränderndem Abstand jeweils bezogen auf den geringsten Abstand oder den mittleren Abstand. Der Abstand zwischen Mantelfläche und Gegenfläche ist vorzugsweise fest vorgegeben oder variabel einstellbar.

Das landwirtschaftliche Gerät ist vorzugsweise als ein Anbaugerät zur Montage an einer selbstfahrenden, geschobenen oder gezogenen landwirtschaftlichen Maschine oder als selbstfahrende Maschine ausgebildet. Zu den selbstfahrenden landwirtschaftlichen Maschinen zählen in diesem Zusammenhang insbesondere Zugmaschinen, Schlepper, Traktoren und dergleichen, an denen das Anbaugerät insbesondere in Fahrtrichtung vorne oder hinten angebracht werden kann. In diesem Zusammenhang kann das landwirtschaftliche Gerät der Erfindung auch gemeinsam oder in integraler Kombination mit anderen (Anbau-)Geräten an einer landwirtschaftlichen Maschine montiert werden.

In einer bevorzugten Ausgestaltung der Erfindung ist eine Antriebsvorrichtung zum Drehantrieb des Rotationskörpers der Pflanzenstoppelbearbeitungsvorrichtung bzw. seines wenigstens einen Rotationselements vorgesehen. Durch das aktive Drehen des Rotationskörpers wird die Zerstörungskraft auf die Pflanzenstoppeln verstärkt und die Gefahr eines blockierenden Einklemmens von Pflanzenstoppeln vermindert, da diese schneller und stärker zwischen Mantelfläche und Gegenfläche verdreht werden können. Alternativ ist es auch denkbar, die Drehbewegung des Rotationskörpers ohne aktiven Antrieb alleine durch die Bewegung des Gerätes in seiner Arbeitsrichtung und den kontaktierenden Pflanzenstoppeln zu bewirken. Falls der Gegenkörper ebenfalls in Form eines Rotationskörpers ausgestaltet ist, so ist dieser vorzugsweise mit einer weiteren Antriebsvorrichtung versehen. Rotationskörper und Gegenkörper werden dabei vorzugsweise in gegenläufigen Drehrichtungen und/oder mit unterschiedlichen Drehgeschwindigkeiten angetrieben.

Der Begriff "Antriebsvorrichtung" soll in diesem Zusammenhang jede Art von Vorrichtung bezeichnen, welche in der Lage ist, den Rotationskörper bzw. sein wenigstens eines Rotationselement (oder ggf. den Gegenkörper) drehend anzutreiben. Zu den Antriebsvorrichtungen zählen in diesem Zusammenhang insbesondere Drehantriebe an den Pflanzenstoppelbearbeitungsvorrichtungen selbst, Antriebe am Anbaugerät, die mit den Pflanzenstoppelbearbeitungsvorrichtungen gekoppelt sind, Getriebe am Anbaugerät, die einerseits mit einem Antrieb an der landwirtschaftlichen Maschine oder einem Bodenantrieb und andererseits mit den Pflanzenstoppelbearbeitungsvorrichtungen gekoppelt sind, und Antriebe an einer selbstfahrenden Maschine. Im Fall von mehreren Pflanzenstoppelbearbeitungsvorrichtungen an einem Gerät bzw. Anbaugerät, können eigene Antriebe oder Getriebe für einzelne Pflanzenstoppelbearbeitungsvorrichtungen oder gemeinsame Antriebe oder Getriebe für mehrere oder alle Pflanzenstoppelbearbeitungsvorrichtungen vorgesehen sein. Die Getriebe können vorzugsweise ausgewählt werden aus Zahnrädern, Kardanwellen, Ketten, Riemenantrieben, Winkelgetrieben, Stirnradgetrieben und dergleichen, ohne dass die Erfindung auf diese Getriebearten beschränkt sein soll. Die Antriebe können vorzugsweise ausgewählt werden aus Brennkraftmaschinen, Elektromotoren, Hydraulik-Einrichtungen, Pneumatik-Einrichtungen, mit Muskelkraft betriebenen Einrichtungen und dergleichen.

Das landwirtschaftliche Gerät weist vorzugsweise mehrere Pflanzenstoppelbearbeitungsvorrichtungen auf. Diese sind vorzugsweise in einer Richtung quer zur Fahrt- bzw. Arbeitsrichtung des Gerätes nebeneinander angeordnet. Die benachbarten Pflanzenstoppelbearbeitungsvorrichtungen sind dabei vorzugsweise in einem Winkel im Bereich von etwa 90° bis etwa 45° zur Fahrt- bzw. Arbeitsrichtung des Gerätes hintereinander angeordnet. Die benachbarten Pflanzenstoppelbearbeitungsvorrichtungen des Gerätes können wahlweise im Gleichlauf (d.h. mit gleichen Drehrichtungen) oder im Gegenlauf (d.h. mit entgegengesetzten Drehrichtungen) angetrieben werden.

In einer bevorzugten Ausgestaltung der Erfindung weist die Pflanzenstoppelbearbeitungsvorrichtung eine Leiteinrichtung auf, die dem Rotationskörper in einer Arbeitsrichtung des Gerätes vorgeschaltet ist und ausgestaltet ist, eine zu bearbeitenden Pflanzenstoppel zwischen die Mantelfläche des Rotationskörpers und die Gegenfläche des Gegenkörpers zu leiten. Im Fall von mehreren Pflanzenstoppelbearbeitungsvorrichtungen ist vorzugsweise jeder eine eigene Leiteinrichtung zugeordnet. Die Leiteinrichtung(en) ist / sind vorzugsweise an dem Gegenkörper angebracht oder integral mit diesem ausgebildet.

Mit Hilfe der Leiteinrichtung kann erreicht werden, dass auch Pflanzenstoppeln in den Spalt zwischen Mantelfläche und Gegenfläche gelangen und zerstört werden, welche gegenüber dem Spalt in einer Richtung quer zur Arbeitsrichtung des Gerätes versetzt sind. Darüber hinaus kann die Leiteinrichtung vorzugsweise auch ausgestaltet oder mit einer weiteren Leiteinrichtung kombiniert sein, um eine Pflanzenstoppel in vertikaler Richtung aufzurichten.

In einer bevorzugten Ausführungsvariante ist diese Leiteinrichtung derart ausgestaltet, dass sie eine zu bearbeitende Pflanzenstoppel zwischen die Mantelfläche des Rotationskörpers und die Gegenfläche des Gegenkörpers oder in eine Richtung zum Rotationskörper einer benachbarten Pflanzenstoppelbearbeitungsvorrichtung hin leitet. Insbesondere bei größeren Durchmessern des Rotationskörpers kann es von Vorteil sein, die Pflanzenstoppeln je nach ihrer Relativposition zum landwirtschaftlichen Gerät einer von zwei benachbarten Pflanzenstoppelbearbeitungsvorrichtungen zuzuleiten.

In einer weiteren bevorzugten Ausgestaltung der Erfindung weist die Pflanzenstoppelbearbeitungsvorrichtung wenigstens eine weitere Leiteinrichtung auf, die in einer Arbeitsrichtung des landwirtschaftlichen Gerätes im Wesentlichen vor dem Rotationskörper angeordnet ist und ausgestaltet ist, eine zu bearbeitende Pflanzenstoppel in einer Richtung quer/schräg zur Arbeitsrichtung des Gerätes zu leiten. Vorzugsweise ist die weitere Leiteinrichtung ausgestaltet, um eine Pflanzenstoppel - je nach Relativposition der Pflanzenstoppel gegenüber dem Gerät - wahlweise in eine von beiden Richtungen quer zur Arbeitsrichtung des Gerätes zu leiten. Insbesondere bei größeren Durchmessern bzw. Ausdehnungen des Rotationskörpers kann es von Vorteil sein, die Pflanzenstoppeln je nach ihrer Relativposition zum landwirtschaftlichen Gerät in einem oder mehreren Schritten einer von zwei benachbarten Pflanzenstoppelbearbeitungsvorrichtungen zuzuleiten. Je nach Größe des Rotationskörpers sind bevorzugt ein, zwei, drei oder mehr weitere Leiteinrichtungen für eine Pflanzenstoppelbearbeitungsvorrichtung vorgesehen. Die Leiteinrichtung und die wenigstens eine weitere Leitereinrichtung sind in Richtung quer zur Arbeitsrichtung des Gerätes vorzugsweise im Wesentlichen gleichmäßig verteilt angeordnet bzw. zueinander beabstandet.

In einer bevorzugten Ausführungsvariante weist diese wenigstens eine weitere Leiteinrichtung der Pflanzenstoppelbearbeitungsvorrichtung eine Gegenfläche auf, welche - ähnlich der Gegenfläche des Gegenkörpers - der Mantelfläche des Rotationskörpers in einem vorbestimmten horizontalen Abstand gegenüber positioniert ist, wobei der vorbestimmte horizontale Abstand kleiner bemessen ist als ein Durchmesser der zu bearbeitenden Pflanzenstoppeln. Die wenigstens eine weitere Leiteinrichtung kann bei dieser Ausgestaltung in vorteilhafter Weise auch zum Zerstören der Pflanzenstoppel genutzt werden.

In einer bevorzugten Ausgestaltung der Erfindung sind eine Position der wenigstens einen Pflanzenstoppelbearbeitungsvorrichtung in Richtung quer zur Arbeitsrichtung des Gerätes bzw. zur Fahrtrichtung der Maschine und/oder ein Abstand zwischen zwei Pflanzenstoppelbearbeitungsvorrichtungen von mehreren Pflanzenstoppelbearbeitungsvorrichtungen in Richtung quer zur Arbeitsrichtung des Gerätes bzw. zur Fahrtrichtung der Maschine variabel einstellbar. Die Pflanzenstoppelbearbeitungsvorrichtungen können so auf einfache Weise an die jeweils zu bearbeitenden Pflanzenstoppel und deren Positionen auf dem Feld angepasst werden. Auf diese Weise kann ein reihenunabhängiges Gerät bereitgestellt werden. Alternativ ist es auch möglich, die Pflanzenstoppelbearbeitungsvorrichtungen an dem Gerät fest zu positionieren und auf diese Weise ein reihenabhängiges Gerät bereitzustellen.

In einer weiteren bevorzugten Ausgestaltung der Erfindung ist eine Haltevorrichtung vorgesehen zum Montieren der wenigstens einen Pflanzenstoppelbearbeitungsvorrichtung an einer landwirtschaftlichen Maschine, einem Anbaugerät einer landwirtschaftlichen Maschine, insbesondere einem Erntegerät, oder einer selbstfahrenden Pflanzenstoppelbearbeitungsmaschine an einer Position die ausgewählt ist aus den Positionen in Fahrtrichtung der Maschine vor einem Vorderrad der Maschine, in Fahrtrichtung der Maschine hinter einem hinteren Rad der Maschine, in Fahrtrichtung der Maschine zwischen den Rädern der Maschine, in Fahrtrichtung der Maschine vor/hinter der Maschine, in Fahrtrichtung der Maschine seitlich zur Maschine und Kombinationen aus diesen Positionen. Besonders bevorzugt ist eine Positionierung in Fahrtrichtung der Maschine vor deren Vorderrad, sodass die Pflanzenstoppeln mit dem Gerät bearbeitet werden können, bevor die jeweilige Maschine mit ihren Rädern über sie hinweg fährt.

Besonders bevorzugt ist auch eine Montage oder Integration des Gerätes an/in einem Anbaugerät (oder Vorsatzgerät), insbesondere einem Erntegerät (z.B. Feldhäcksler, Mähdrescher, etc.), sodass die Bearbeitung der Pflanzenstoppeln in einem Arbeitsgang mit dem Erntevorgang durchgeführt werden kann. Hierdurch kann ein separater Arbeitsgang vermieden werden, was zu Zeit-, Energie- und Kosteneinsparungen führt und eine weitere Verdichtung des Bodens vermindert. Das Gerät ist dabei dem Anbaugerät insbesondere im Fall eines Erntegerätes in Fahrtrichtung der Maschine nachgeordnet.

In einer alternativen Ausführungsform der Erfindung ist das landwirtschaftliche Gerät als eine selbstfahrende Pflanzenstoppelbearbeitungsmaschine ausgestaltet.

Die Haltevorrichtung ist vorzugsweise (höhen-)verstellbar an der landwirtschaftlichen Maschine, dem Anbaugerät oder der selbstfahrenden Pflanzenstoppelbearbeitungsmaschine montierbar. Alternativ oder zusätzlich ist die wenigstens eine Pflanzenstoppelbearbeitungsvorrichtung vorzugsweise (höhen-) verstellbar an der Haltevorrichtung angebracht. Vorzugsweise sind das Gerät bzw. seine Pflanzenstoppelbearbeitungsvorrichtungen variabel positionierbar, um das Gerät an die jeweils zu bearbeitenden Pflanzenstoppeln und/oder die jeweiligen Bodenverhältnisse anpassen zu können. Zum Einhalten einer gewünschten Höhenposition über dem (Erd-)Boden sind vorzugsweise Sensoren, Tasträder oder dergleichen sowie eine Vorrichtung zur Höhenverstellung des Gerätes und/oder seiner Pflanzenstoppelbearbeitungsvorrichtungen an dem Gerät vorgesehen. Vorzugsweise sind das Gerät und/oder seine Pflanzenstoppelbearbeitungsvorrichtungen zudem zwischen einer Arbeitsstellung und einer Nichtbetriebsstellung bewegbar. Das Verstellen des Gerätes bzw. der Pflanzenstoppelbearbeitungsvorrichtung umfasst vorzugsweise auch ein zumindest teilweises Ein- oder Hochklappen von seitlich über die Maschinenabmessung hinaus ragenden Teilen des Gerätes.

In einer weiteren bevorzugten Ausgestaltung der Erfindung weist das Gerät wenigstens ein Führungselement auf, welches ausgestaltet und angeordnet ist, um die Pflanzenstoppelbearbeitungsvorrichtung in einer vorbestimmten Höhe über einem Erdboden zu führen. Mit Hilfe dieses wenigstens einen Führungselements kann die gewünschte oder optimale Arbeitshöhe der Pflanzenstoppelbearbeitungsvorrichtung eingestellt und während des Einsatzes des Gerätes beibehalten werden. Das wenigstens eine Führungselement ist bevorzugt an der Haltevorrichtung des Gerätes oder an einer Pflanzenstoppelbearbeitungsvorrichtung des Gerätes angebracht. Je nach Breite des Gerätes quer zur Arbeitsrichtung sind vorzugsweise ein, zwei, drei, vier oder mehr Führungselemente vorgesehen. Das wenigstens eine (Höhen-)Führungselement ist vorzugsweise in der Form eines Laufrades oder einer Kufe ausgestaltet.

In einer weiteren bevorzugten Ausgestaltung der Erfindung sind die Pflanzenstoppelbearbeitungsvorrichtungen als Baueinheiten / Module an der Haltevorrichtung befestigbar, wobei jede Baueinheit ein, zwei oder mehr Pflanzenstoppelbearbeitungsvorrichtungen mit einer gemeinsamen Antriebsvorrichtung aufweist. Durch den modularen Aufbau in Baueinheiten mit ein, zwei oder mehr Pflanzenstoppelbearbeitungsvorrichtungen lassen sich zum Beispiel Montage und Austausch der Pflanzenstoppelbearbeitungsvorrichtungen vereinfachen.

In einer weiteren bevorzugten Ausgestaltung der Erfindung ist die Gegenfläche des Gegenkörpers der Mantelfläche des Rotationskörpers entlang eines vorbestimmten Umfangsabschnitts des Rotationskörpers in einem vorbestimmten horizontalen Abstand gegenüber positioniert. Das Zusammenwirken zwischen Rotationskörper und Gegenkörper auf eine Pflanzenstoppel dazwischen kann so über einen längeren Zeitraum erfolgen und damit effektiver sein. Der Gegenkörper ist dabei vorzugsweise in der Form eines gebogenen Plattenkörpers ausgebildet, welcher der Mantelfläche des Rotationskörpers folgt. In alternativen Ausführungsformen sind auch nur im Wesentlichen punktuelle Kontaktabschnitte denkbar.

In einer weiteren bevorzugten Ausgestaltung der Erfindung weisen die Mantelfläche des Rotationskörpers und/oder die Gegenfläche des Gegenkörpers wenigstens eine Zusatzeinrichtung auf, die ausgewählt ist aus Reibflächen, Oberflächenprofilen (z.B. vertikale Rippen oder Stege), Schneidelementen und Reißelementen. Durch die wenigstens eine Zusatzeinrichtung kann die Zerstörungswirkung auf die Pflanzenstoppeln weiter erhöht werden.

Die wenigstens eine Zusatzeinrichtung ist ein Verschleißteil und daher vorzugsweise aus einem hochfesten oder verschleißfesten Material (bevorzugt Metall oder Kunststoff) gefertigt. Die wenigstens eine Zusatzeinrichtung ist vorzugsweise einstückig mit der Mantelfläche des Rotationskörpers ausgebildet, fest in diese integriert oder lösbar an dieser befestigt.

Die Mantelfläche des Rotationskörpers ist ebenfalls ein Verschleißteil und ist daher ebenfalls vorzugsweise aus einem hochfesten oder verschleißfesten Material (bevorzugt Metall oder Kunststoff) gefertigt. Der Rotationskörper oder seine Mantelfläche sind vorzugsweise lösbar und somit austauschbar an der Pflanzenstoppelbearbeitungsvorrichtung vorgesehen.

In einer noch weiteren Ausgestaltung der Erfindung sind der Gegenkörper und/oder der Rotationskörper in horizontaler Richtung federnd gelagert und dabei in Richtung auf die jeweils andere Komponente des Gegenkörpers und des Rotationskörpers vorgespannt. Durch diese Maßnahme kann die Klemmwirkung auf die Pflanzenstoppeln verstärkt werden, wodurch die Zerstörungswirkung auf die Pflanzenstoppeln und die Ausreißeffektivität weiter erhöht werden können. Außerdem können zwischen Mantelfläche und Gegenfläche gelangende Fremdkörper (z.B. Steine, andere Pflanzenteile, etc.) einfacher und/oder automatisch wieder entfernt und so ein Blockieren der Pflanzenstoppelbearbeitungsvorrichtung verhindert werden. Zudem kann diese Maßnahme als Überlastsicherung für die Pflanzenstoppelbearbeitungsvorrichtung bzw. deren Drehantrieb(e) dienen. Alternativ können Rotationskörper und/oder Gegenkörper im Rahmen der Erfindung auch ortsfest an dem Anbaugerät positioniert sein. Außerdem können durch diese Maßnahme Pflanzenstoppeln mit unterschiedlichen Durchmessern effektiv bearbeitet und zerstört werden.

In einer bevorzugten Ausgestaltung der Erfindung wird ein Spalt zwischen der Mantelfläche des Rotationskörpers und der Gegenfläche des Gegenkörpers in Richtung nach unten hin weiter. Durch diese Maßnahme kann in vorteilhafter Weise verhindert werden, dass Steine und andere Störkörper im Spalt zwischen Rotationskörper und Gegenkörper eingeklemmt werden, da sie bei der Drehung des Rotationskörpers auch einen Impuls nach unten in Richtung Erdboden erhalten und so wieder aus dem Spalt heraus befördert werden.

In einer weiteren bevorzugten Ausgestaltung der Erfindung ist der Rotationskörper im Wesentlichen konisch ausgebildet und ist die Drehachse des konischen Rotationskörpers relativ zur Vertikalen um einen vorbestimmten Anstellwinkel angestellt. Durch diese Maßnahme kann erreicht werden, dass ein Pflanzenstoppel im Spalt zwischen Rotationskörper und Gegenkörper oben und unten im Spalt durch die unterschiedlichen Umfangsgeschwindigkeiten des konischen Rotationskörpers verschieden gedreht wird, sodass die Pflanzenstoppel stärker verdrillt werden kann. Der Anstellwinkel liegt vorzugsweise in einem Bereich größer als etwa 5° und kleiner als etwa 45°. Der Anstellwinkel ist vorzugsweise so gewählt, dass die Mantelfläche des Rotationskörpers an einer vorbestimmten Umfangsstelle im Wesentlichen vertikal und/oder im Wesentlichen parallel zur Gegenfläche des Gegenkörpers verläuft. Der konische Rotationskörper ist vorzugsweise so angeordnet, dass seine im Durchmesser kleinere Seite schräg nach unten zeigt, sodass die Umfangsgeschwindigkeit des Rotationskörpers oben größer ist als unten.

In einer noch weiteren Ausgestaltung der Erfindung weist die Pflanzenstoppelbearbeitungsvorrichtung wenigstens ein Räumelement auf, welches an einer dem Erdboden abgewandten Seite des Rotationskörpers an diesem angebracht ist und in radialer Richtung über einen Spalt zwischen der Mantelfläche des Rotationskörpers und der Gegenfläche des Gegenkörpers hinweg ragt. Mit einem solchen Räumelement können vorzugsweise Störkörper wie Pflanzenreste und dergleichen von dem Gegenkörper geräumt werden, sodass eine Bearbeitung der Pflanzenstoppeln ungehindert fortgesetzt werden kann. Das Räumelement ist vorzugsweise als Stange, Leiste, Rechen, Besen, Bürsten oder dergleichen ausgestaltet. Vorzugsweise sind an dem Rotationskörper ein, zwei oder mehr solche Räumelemente vorgesehen.

In einer noch weiteren bevorzugten Ausgestaltung der Erfindung ist das Gerät ferner mit einer Wurzelstock-Bearbeitungsvorrichtung ausgestattet, die in einer Arbeitsrichtung des Gerätes hinter der Drehachse des Rotationskörpers der Pflanzenstoppelbearbeitungsvorrichtung angeordnet ist und ausgestaltet ist, um einen Wurzelstock eines zu bearbeitenden Pflanzenstoppels (weiter) zu bearbeiten. Die Wurzelstock-Bearbeitungsvorrichtung ragt vorzugsweise ein vorbestimmtes Tiefenmaß in den Erdboden hinein, um einen Wurzelstock herausreißen und/oder zerstören zu können. Falls ein (Höhen-)Führungselement vorgesehen ist, kann diese Wurzelstock-Bearbeitungsvorrichtung vorzugsweise an diesem angebracht oder mit diesem kombiniert sein. Bevorzugt ist für jede Pflanzenstoppelbearbeitungsvorrichtung wenigstens eine Wurzelstock-Bearbeitungsvorrichtung vorgesehen, in Richtung quer zur Arbeitsrichtung des Gerätes bevorzugt im Wesentlichen am Spalt zwischen Rotationskörper und Gegenkörper ausgerichtet.

Gegenstand der Erfindung ist auch eine landwirtschaftliche Maschine mit einem Anbaugerät, welches als ein oben beschriebenes Gerät der Erfindung ausgestaltet ist.

Gegenstand der Erfindung ist ferner eine landwirtschaftliche Maschine mit einem Erntegerät und einem Anbaugerät, welches als ein oben beschriebenes Gerät der Erfindung ausgestaltet ist. Das Anbaugerät ist dabei vorzugsweise an dem Erntegerät angebracht oder bildet mit diesem ein gemeinsames Vorsatzgerät.

Gegenstand der Erfindung ist auch eine selbstfahrende Pflanzenstoppelbearbeitungsmaschine mit einem oben beschriebenen landwirtschaftlichen Gerät der Erfindung.

Bei dem erfindungsgemäßen Verfahren zur Bearbeitung von Pflanzenstoppeln auf einem Feld werden die Pflanzenstoppeln zwischen einer Mantelfläche eines sich drehenden Rotationskörpers, wobei eine Drehachse des Rotationskörpers in einem vorbestimmten Winkel zur horizontalen Ebene des Feldes verläuft, und einer Gegenfläche eines Gegenkörpers aufgenommen und um ihre Längsachse verdreht.

Vorzugsweise werden die Pflanzenstoppeln zwischen der Mantelfläche des Rotationskörpers und der Gegenfläche des Gegenkörpers auch gequetscht.

Vorzugsweise werden die Pflanzenstoppeln entlang eines vorbestimmten Umfangsabschnitts des Rotationskörpers zwischen der Mantelfläche des Rotationskörpers und der Gegenfläche des Gegenkörpers aufgenommen sowie verdreht und/oder gequetscht.

Vorzugsweise werden die zwischen der Mantelfläche des Rotationskörpers und der Gegenfläche des Gegenkörpers aufgenommenen Pflanzenstoppeln letztlich auch aus dem Wurzelstock oder mit dem Wurzelstock (bzw. mit Teilen des Wurzelstocks) aus dem Boden herausgerissen.

Mit dem Pflanzenstoppelbearbeitungsverfahren der Erfindung lassen sich die gleichen Vorteile erzielen wie mit dem oben beschriebenen landwirtschaftlichen Gerät der Erfindung. Bezüglich der Vorteile, Begriffsdefinitionen und bevorzugter Ausgestaltungen wird daher an dieser Stelle nochmals auf die obigen Ausführungen in Zusammenhang mit dem Gerät verwiesen.

Die Erfindung ist insbesondere zur Bearbeitung von Maisstoppeln und damit zur Bekämpfung des Maiszünslers in vorteilhafter Weise geeignet. Mit Hilfe der Erfindung lassen sich aber auch andere Schädlinge und Pilze bekämpfen und auch Pflanzenstoppeln anderer Pflanzenarten bearbeiten. Insbesondere zum Zwecke der Bekämpfung des Maiszünslers sollte der Einsatz des erfindungsgemäßen landwirtschaftliche Gerätes und Verfahrens obligatorisch und flächendeckend erfolgen. Es ist an dieser Stelle auch darauf hinzuweisen, dass die Bearbeitung der Pflanzenstoppeln mit dem erfindungsgemäßen Gerät / Verfahren wahlweise auch vor oder gemeinsam mit einem Erntevorgang der jeweiligen Pflanzen angewendet werden können.

Obige sowie weitere Merkmale und Vorteile der Erfindung werden aus der nachfolgenden Beschreibung eines bevorzugten, nicht-einschränkenden Ausführungsbeispiels anhand der beiliegenden Zeichnung besser verständlich. Darin zeigen, zum Teil schematisch:
- Fig. 1: eine Perspektivansicht einer landwirtschaftlichen Maschine mit einem Erntegerät und einem Anbaugerät gemäß einem Ausführungsbeispiel der Erfindung;
- Fig. 2: eine Perspektivansicht eines Anbaugerätes gemäß einem Ausführungsbeispiel der Erfindung in der Ansicht aus Arbeitsrichtung;
- Fig. 3: eine Draufsicht einer Pflanzenstoppelbearbeitungsvorrichtung des Anbaugerätes von Fig. 2 zur Erläuterung des Funktionsprinzips der Erfindung;
- Fig. 4: eine Draufsicht von zwei benachbarten Pflanzenstoppelbearbeitungsvorrichtungen eines Anbaugerätes gemäß einem weiteren Ausführungsbeispiel der Erfindung;
- Fig. 5: eine Unteransicht eines Rotationskörpers einer Pflanzenstoppelbearbeitungsvorrichtung gemäß einem Ausführungsbeispiel der Erfindung;
- Fig. 6: eine Vorderansicht einer Pflanzenstoppelbearbeitungsvorrichtung gemäß einem weiteren Ausführungsbeispiel der Erfindung;
- Fig. 7: eine stark vereinfachte Seitenansicht eines landwirtschaftlichen Gerätes gemäß einem weiteren Ausführungsbeispiel der Erfindung;
- Fig. 8: eine stark vereinfachte Seitenansicht eines landwirtschaftlichen Gerätes gemäß einem weiteren Ausführungsbeispiel der Erfindung;
- Fig. 9: eine stark vereinfachte Vorderansicht einer Pflanzenstoppelbearbeitungsvorrichtung gemäß einem noch weiteren Ausführungsbeispiel der Erfindung;
- Fig. 10: eine vereinfachte Draufsicht einer Pflanzenstoppelbearbeitungsvorrichtung gemäß einem weiteren Ausführungsbeispiel;
- Fig. 11: eine vereinfachte Draufsicht einer Anordnung von zwei Pflanzenstoppelbearbeitungsvorrichtungen gemäß einem weiteren Ausführungsbeispiel;
- Fig. 12: eine vereinfachte Draufsicht einer Pflanzenstoppelbearbeitungsvorrichtung gemäß einem noch weiteren Ausführungsbeispiel;
- Fig. 13: eine Draufsicht einer Baueinheit mit einer Pflanzenstoppelbearbeitungsvorrichtung gemäß einem Ausführungsbeispiel;
- Fig. 14: eine perspektivische Teilansicht eines Anbaugerätes mit mehreren Baueinheiten gemäß Fig. 13;
- Fig. 15: eine Draufsicht einer Baueinheit mit zwei Pflanzenstoppelbearbeitungsvorrichtungen gemäß einem Ausführungsbeispiel; und
- Fig. 16: eine perspektivische Teilansicht eines Anbaugerätes mit mehreren Baueinheiten gemäß Fig. 15.

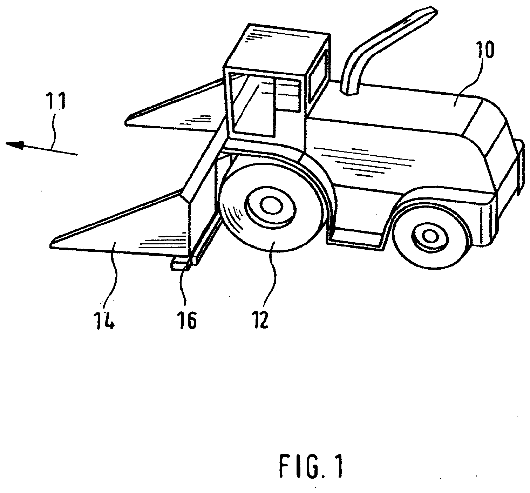

Fig. 1 zeigt beispielhaft einen Feldhäcksler für die Maisernte mit einer landwirtschaftlichen Maschine 10 in Form eines Traktors, bei dem in Fahrtrichtung 11 vorne ein Erntevorsatzgerät 14 angeordnet ist. Ein erfindungsgemäßes Anbaugerät 16 zur Bearbeitung der durch das Erntevorsatzgerät 14 abgeschnittenen Maisstoppeln ist in diesem Ausführungsbeispiel an dem Erntevorsatzgerät 14 angebracht und bildet mit diesem ein einheitliches Vorsatzgerät.

Bei diesem Ausführungsbeispiel ist das erfindungsgemäße Anbaugerät 16 dem Erntevorsatzgerät 14 in Fahrtrichtung 11 der Maschine 10 unmittelbar nachgeschaltet und in Fahrtrichtung 11 der Maschine 10 noch vor deren Vorderrädern 12 angeordnet. Auf diese Weise kann die (Nach-)Bearbeitung der Maisstoppeln in einem Arbeitsgang mit der Maisernte durch das Erntevorsatzgerät 14 erfolgen, wodurch Zeit, Energie und Kosten eingespart werden. Außerdem können auf diese Weise die Maisstoppeln in ihrem abgeschnittenen, aufrechten Zustand bearbeitet werden, bevor eine Maschine mit ihren Rädern über sie hinweg fährt.

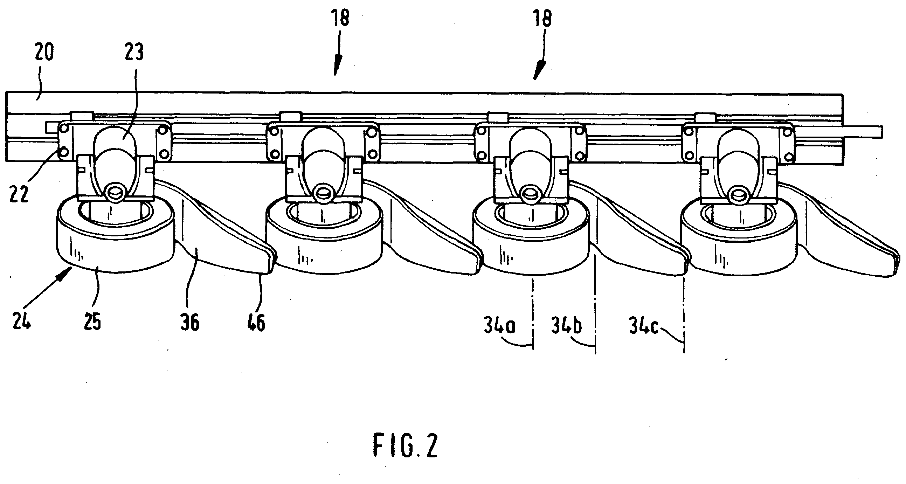

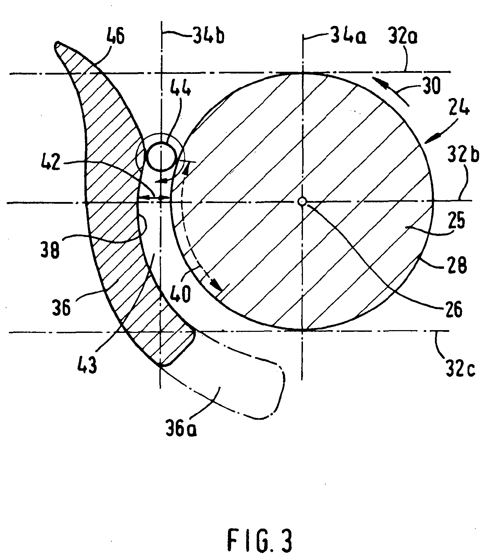

Aufbau und Funktionsweise des Anbaugerätes 16 zur Bearbeitung der Maisstoppeln werden nun Bezug nehmend auf Fig. 2 und 3 näher erläutert.

Das Anbaugerät 16 weist mehrere, in diesem Ausführungsbeispiel vier Vorrichtungen 18 zur Bearbeitung von Pflanzenstoppeln (Pflanzenstoppelbearbeitungsvorrichtungen) auf, sodass damit vier Reihen von Maisstoppeln gleichzeitig bearbeitet werden können.

Die Pflanzenstoppelbearbeitungsvorrichtungen 18 sind an einer schienen- oder leistenförmigen Haltevorrichtung 20 angebracht. Mit dieser Haltevorrichtung 20 können sie an dem Erntevorsatzgerät 14 oder wahlweise auch an einem anderen Anbaugerät, der Maschine 10 selbst oder einer selbstfahrenden Pflanzenstoppelbearbeitungsmaschine montiert werden. Die Montage der Pflanzenstoppelbearbeitungsvorrichtungen 18 erfolgt dabei bevorzugt so, dass sie zwischen einer Arbeitsstellung und einer Nichtbetriebsstellung bewegt bzw. verstellt werden können.

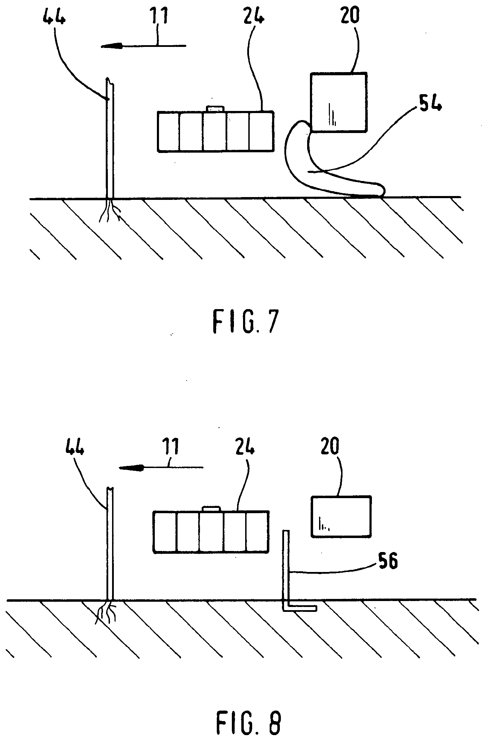

Ferner sind die Pflanzenstoppelbearbeitungsvorrichtungen 18 variabel höhenverstellbar an der Haltevorrichtung 20 angebracht, ist die Haltevorrichtung 20 variabel höhenverstellbar ausgestaltet und/oder ist die Haltevorrichtung 20 variabel höhenverstellbar montiert. Auf diese Weise kann das Anbaugerät 16 an die jeweils zu bearbeitenden Pflanzenstoppeln und/oder die jeweiligen Bodenverhältnisse angepasst werden. Zum Einhalten der gewünschten Höhenposition über dem Erdboden sind vorzugsweise Sensoren, Tasträder, Kufen oder dergleichen Führungselemente 54 (siehe Fig. 7) sowie eine Vorrichtung zur Höhenverstellung des Gerätes und/oder seiner Pflanzenstoppelbearbeitungsvorrichtungen an dem Gerät vorgesehen. Die Führungselemente 54 können zum Beispiel an der Haltevorrichtung 20 oder an den Pflanzenstoppelbearbeitungsvorrichtungen 18 angebracht sind. In Richtung quer zur Arbeitsrichtung 11 sind zwei oder mehr solcher Führungselemente 54 an dem Gerät 16 vorgesehen.

Außerdem können die Pflanzenstoppelbearbeitungsvorrichtungen 18 jeweils fest und in festen Abständen zueinander an der Haltevorrichtung 20 positioniert sein. Der gegenseitige Abstand bzw. das Rastermaß quer zur Fahrtrichtung 11 beträgt zum Beispiel etwa 35 cm. Auf diese Weise wird ein reihenabhängiges Anbaugerät 16 bereitgestellt, dessen Pflanzenstoppelbearbeitungsvorrichtungen für bestimmte Pflanzverhältnisse / Reihenabstände voreingestellt sind.

In einer anderen Variante des Anbaugerätes 16 sind die Pflanzenstoppelbearbeitungsvorrichtungen 18 verschiebbar an der Haltevorrichtung 20 angebracht, so dass ihre Positionen und ihre gegenseitigen Abstände variabel eingestellt werden können. Bei dieser Variante handelt es sich um ein reihenunabhängiges Anbaugerät 16, das auf einfache Weise vom Benutzer an die jeweiligen Pflanzverhältnisse / Reihenabstände angepasst werden kann.

Die einzelnen Pflanzenstoppelbearbeitungsvorrichtungen 18 weisen jeweils eine Aufhängung 22 auf, welche an der Haltevorrichtung 20 (fest oder variabel) befestigt ist. Die Aufhängung 22 beinhaltet außerdem eine Antriebsvorrichtung 23 in Form eines Getriebes (z.B. Zahnradgetriebe) oder eines eigenen Antriebs (z.B. Elektromotor). Die Antriebsvorrichtungen 23 können eigenständig ausgestaltet sein, miteinander gekoppelt sein, mit einem gemeinsamen Antrieb am Anbaugerät, am Erntevorsatzgerät 14 oder an der Maschine 10 verbunden sein, mit einem Bodenantrieb verbunden sein und dergleichen. Die Antriebsvorrichtungen 23 können im Wesentlichen horizontal ausgerichtet sein, wie in Fig. 2 dargestellt, oder auch im Wesentlichen vertikal.

Weiter weisen die einzelnen Pflanzenstoppelbearbeitungsvorrichtungen 18 jeweils einen Rotationskörper 24 auf, der im Wesentlichen aus einem Rotationselement 25 in Form eines Rades besteht, das um eine in diesem Ausführungsbeispiel im Wesentlichen vertikale Drehachse 26 drehbar ist, von der jeweiligen Antriebsvorrichtung 23 in einer Drehrichtung 30 angetrieben wird, und an der Aufhängung 22 montiert ist. Die Umfangsfläche des Rades 25 bildet eine in diesem Ausführungsbeispiel im Wesentlichen vertikal verlaufende Mantelfläche 28 des Rotationskörpers 24. Das Rad 25 hat beispielsweise einen Außendurchmesser von etwa 20 cm. Mit anderen Worten sind in diesem Ausführungsbeispiel sowohl die Drehachse 26 als auch die Mantelfläche 28 des Rotationskörpers 24 in einem vorbestimmten Winkel von etwa 90° zur horizontalen Ebene ausgerichtet.

An der Aufhängung 22 der Pflanzenstoppelbearbeitungsvorrichtung 18 ist zudem ein platten- oder leistenförmiger Gegenkörper 36 befestigt. Dieser Gegenkörper 36 erstreckt sich in dem Ausführungsbeispiel der Fig. 2 und 3 über einen vorbestimmten Umfangsabschnittes 40 in einem vorbestimmten horizontalen Abstand 42 entlang des Rades 25. Die dem Rad 25 zugewandte Seite des Gegenkörpers 36 bildet dabei eine Gegenfläche 38, die mit der Mantelfläche 28 des Rades 25 zusammenwirkt.

Die Mantelfläche 28 des rotierenden Rades 25 und die Gegenfläche 38 des Gegenkörpers 36 bilden zwischen sich einen Spalt 43, in den eine Maisstoppel 44 aufgenommen werden kann. Durch die Drehung des Rades 25 in der Drehrichtung 30 und die Bewegung der gesamten Pflanzenstoppelbearbeitungsvorrichtung 18 in der Arbeitsrichtung 11 des Anbaugerätes 16 bzw. der Fahrtrichtung 11 der Maschine 10 wird die Maisstoppel 44 in diesem Spalt 43 entgegen der Arbeitsrichtung 11 des Anbaugerätes 16 durch den Spalt nach hinten bewegt und dabei um seine Längsachse verdreht. Der horizontale Abstand 42 ist außerdem kleiner bemessen als der Durchmesser der Maisstoppel 44, sodass die Maisstoppel 44 zudem gequetscht wird. Dies führt zu einem Aufspleißen / Aufreißen / Zerfasern und damit zu einer effektiven Zerstörung der Maisstoppel 44, die dann auch schneller verrottet und damit keinen (Über-)Lebensraum mehr für die Puppen des Maiszünslers bietet.

Durch das Klemmen und ggf. Quetschen der Maisstoppel 44 zwischen Mantelfläche 28 und Gegenfläche 38 kann die in dem Spalt 43 aufgenommene Maisstoppel 44 bei der Bewegung des Anbaugerätes 16 in Fahrtrichtung 11 der Maschine 10 außerdem aus ihrem Wurzelstock heraus gerissen / gezogen oder zusammen mit ihrem Wurzelstock bzw. mit zumindest Teilen des Wurzelstocks aus der Erde heraus gerissen / gezogen werden.

Wie in Fig. 3 beispielhaft veranschaulicht, ist die in Arbeitsrichtung 11 vordere Kante des Gegenkörpers 36 und seiner Gegenfläche 38 in Arbeitsrichtung 11 des Anbaugerätes 16 hinter einer vorderen Ebene 32a und vor einer mittleren Durchmesserebene 32b des Rotationskörpers 24 positioniert. Zudem ist die in Arbeitsrichtung 11 hintere Kante des Gegenkörpers 36 und seiner Gegenfläche 38 in Arbeitsrichtung 11 des Anbaugerätes 16 hinter einer hinteren Ebene 32c des Rotationskörpers 24 positioniert (strichpunktiert dargestellter verlängerter Gegenkörper 36a in Fig. 3). Wahlweise kann diese in Arbeitsrichtung hintere Kante des Gegenkörpers 36 auch hinter der mittleren Durchmesserebene 32b, aber noch vor der hinteren Ebene 32c des Rotationskörpers 24 positioniert sein (durchgezogene Linie in Fig. 3).

Außerdem können der Gegenkörper 36 und/oder der Rotationskörper 24 in horizontaler Richtung elastisch federnd an der Aufhängung 22 gelagert sein. Dabei sind der Gegenkörper 36 und der Rotationskörper 24 in Richtung aufeinander zu vorgespannt. Durch diese zusätzliche Maßnahme können Maisstoppeln 44 mit unterschiedlichen Durchmessern effektiv bearbeitet werden und können die Krafteinwirkung auf die Maisstoppeln 44 erhöht und damit deren Zerstörung effektiver bewirkt werden. Durch die elastisch federnde Lagerung von Rotationskörper 24 und/oder Gegenkörper 36 können außerdem zwischen Mantelfläche 28 und Gegenfläche 38 geratene Fremdkörper (z.B. Steine, andere Pflanzenteile, etc.) einfach oder sogar von selbst wieder entfernt werden, sodass das Risiko einer blockierenden Pflanzenstoppelbearbeitungsvorrichtung 18 reduziert werden kann. In diesem Zusammenhang kann auch das Risiko einer Überlastung der Pflanzenstoppelbearbeitungsvorrichtung 18 bzw. ihrer Drehantrieb(e) vermindert werden.

In der Praxis sind die Maisstoppeln 44 nicht immer exakt in einer Reihe auf dem Feld angeordnet. Um dennoch gewährleisten zu können, dass möglichst alle Maisstoppeln 44 mit dem Anbaugerät 16 bearbeitet und zerstört werden, weisen die Pflanzenstoppelbearbeitungsvorrichtungen 18 zudem jeweils eine Leiteinrichtung 46 auf. Die Leiteinrichtungen 46 leiten die Maisstoppeln 44, die gegenüber der Ebene 34b des vorderen Spalteingangs zwischen Mantelfläche 28 und Gegenfläche 38 quer zur Arbeitsrichtung 11 versetzt sind, in diesen Spalt 43 hinein.

Die Leiteinrichtungen 46 sind beispielsweise integral mit den Gegenkörpern 36 ausgebildet und bilden zum Beispiel eine Verlängerung des Gegenkörpers 36 in Arbeitsrichtung 11 des Anbaugerätes 16 nach vorne, welche nach hinten in den Gegenkörper 36 bzw. seine Gegenfläche 38 übergeht. Wie in Fig. 2 und 3 veranschaulicht, ist die in Arbeitsrichtung 11 vordere Kante der Leiteinrichtung 46 in Arbeitsrichtung 11 des Anbaugerätes 16 vor einer vorderen Ebene 32a des Rotationskörpers 24 positioniert. Außerdem ragt die vordere Kante der Leiteinrichtung 46 seitlich bis über die Ebene 34c des Außendurchmessers des Rotationskörpers 24 einer benachbarten Pflanzenstoppelbearbeitungsvorrichtung 18 hinaus, zum Beispiel maximal bis zur Durchmesserebene 34a des Rotationskörpers 24 in der Arbeitsrichtung 11.

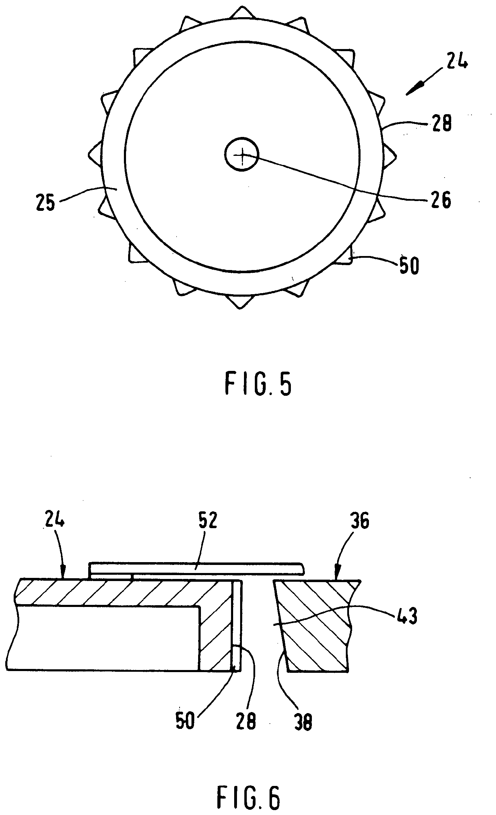

Wie in Fig. 5 dargestellt, können die Mantelfläche 28 des Rotationskörpers 24 und/oder die Gegenfläche 38 des Gegenkörpers 36 optional wenigstens eine Zusatzeinrichtung, wie beispielsweise eine Reibfläche, ein Oberflächenprofil (wie zum Beispiel vertikale Rippen oder Stege 50), ein Schneidelement oder ein Reißelement aufweisen. Mit Hilfe derartiger Zusatzeinrichtungen kann die Zerstörungswirkung auf die Maisstoppeln 44 weiter erhöht werden.

Bei dem Rotationselement 25 und seinen Zusatzeinrichtungen handelt es sich jeweils um Verschleißelemente. Diese sind deshalb bevorzugt aus einem verschleißfesten bzw. hochfesten Material (z.B. Metall oder Kunststoff) gefertigt. Außerdem sind die Zusatzeinrichtungen bevorzugt lösbar an der Mantelfläche 28 des Rotationselements 25 des Rotationskörpers 24 angebracht, sodass sie einfach ausgetauscht und ersetzt werden können.

Wie in Fig. 5 und 6 angedeutet, kann das Rotationselement 25 des Rotationskörpers 24 zudem als ein Hohlrad ausgebildet sein, sodass ein Gewicht der Pflanzenstoppelbearbeitungsvorrichtung reduziert werden kann. Um eine ausreichende Stabilität des Hohlrades 24 zu gewährleisten, ist dieses beispielsweise aus Metall gefertigt.

Das oben anhand der Fig. 1 bis 3 beschriebene landwirtschaftliche Gerät 16 kann in vielfältiger Weise abgewandelt oder modifiziert werden. Alle oben beschriebenen und nachfolgend erläuterten Ausführungsbeispiele und Merkmalskombinationen können dabei ein- oder mehrfach miteinander kombiniert werden.

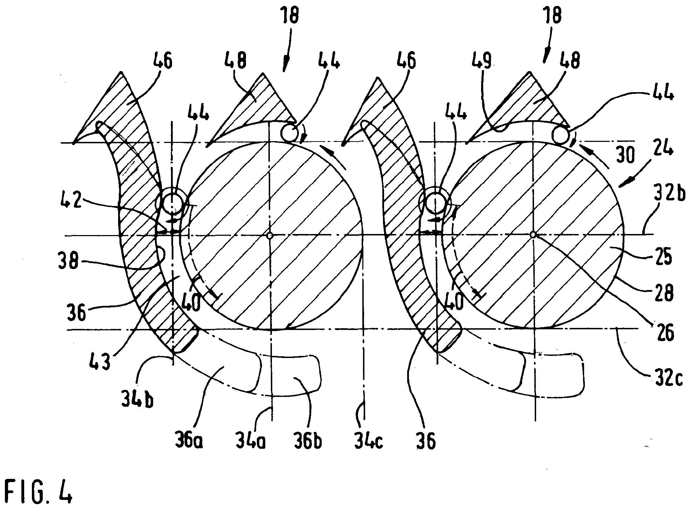

Fig. 4 zeigt ein weiteres Ausführungsbeispiel der Erfindung, das zum Beispiel bei Rotationskörpern 24 von Vorteil ist, die aus Rotationselementen 25 mit größeren Durchmessern gebildet sind. In Fig. 4 sind zwei in Richtung quer zur Arbeitsrichtung 11 benachbarte Pflanzenstoppelbearbeitungsvorrichtungen 18 dargestellt, das Gerät 16 kann aber natürlich mehr als diese zwei Vorrichtungen 18 aufweisen.

Im Vergleich zum Ausführungsbeispiel von Fig. 2 und 3 können die Pflanzenstoppelbearbeitungsvorrichtungen 18 jeweils einen noch weiter verlängerten Gegenkörper 36b aufweisen. Der verlängerte Gegenkörper 36b kann in diesem Fall entlang des Umfanges des Rotationskörpers 24 bis über die Durchmesserebene 34a des Rotationskörpers 24 in Arbeitsrichtung 11 hinaus reichen.

Ein weiterer Unterschied zum Ausführungsbeispiel von Fig. 2 und 3 ist in der Leiteinrichtung 46 zu erkennen. Diese ist in Draufsicht an ihrem in Arbeitsrichtung 11 vorderen Ende zum Beispiel etwa dreieckförmig ausgestaltet. Sie besitzt damit zwei in Arbeitsrichtung 11 schräg nach hinten verlaufende Leitflächen. Die eine Leitfläche (rechts in Fig. 4) leitet wie beim obigen Ausführungsbeispiel von Fig. 2 und 3 eine Pflanzenstoppel 44 in den Spalt 43 zwischen dem Rotationskörper 24 und dem Gegenkörper 36. Die andere Leitfläche (links in Fig. 4) leitet eine Pflanzenstoppel 44 in Richtung zum Rotationskörper 24 der (in Fig. 4 links) benachbarten Pflanzenstoppelbearbeitungsvorrichtung 18. Dort wird sie durch den sich drehenden Rotationskörper 24 schließlich ebenfalls in den Spalt 43 zwischen Rotationskörper 24 und Gegenkörper 36 gefördert, bzw. in den Spalt zwischen dem Rotationskörper 24 und der weiteren Leiteinrichtung 48, falls vorhanden (siehe unten).

Alternativ oder zusätzlich ist jede der Pflanzenstoppelbearbeitungsvorrichtungen 18 mit einer weiteren Leiteinrichtung 48 ausgestattet. Bei noch größeren Rotationskörpern 24 können je Pflanzenstoppelbearbeitungsvorrichtung 18 auch zwei oder mehr weitere Leiteinrichtungen 48 vorgesehen sein. Die Leiteinrichtungen 46 und die weiteren Leiteinrichtungen 48 sind in Richtung quer zur Arbeitsrichtung 11 im Wesentlichen regelmäßig verteilt bzw. gleichmäßig beabstandet angeordnet. Die Freiräume zwischen benachbarten (weiteren) Leiteinrichtungen 46, 48 in Richtung quer zur Arbeitsrichtung 11 liegen beispielsweise in einem Bereich von etwa 4 - 10 cm, bevorzugter in einem Bereich von etwa 5 - 8 cm. Der Abstand bzw. das Rastermaß zwischen benachbarten (weiteren) Leiteinrichtungen 46, 48 in Richtung quer zur Arbeitsrichtung 11 liegt beispielsweise in einem Bereich von etwa 10 - 25 cm, bevorzugter in einem Bereich von etwa 15 - 20 cm.

Die weiteren Leiteinrichtungen 48 haben - ähnlich wie die vorderen Endbereiche der Leiteinrichtungen 46 - in Draufsicht im Wesentlichen die Form eines Dreiecks. Sie besitzen damit ebenfalls zwei in Arbeitsrichtung 11 schräg nach hinten verlaufende Leitflächen. Die eine Leitfläche (links in Fig. 4) leitet eine Pflanzenstoppel 44 in den Spalt 43 zwischen dem Rotationskörper 24 und dem Gegenkörper 36. Die andere Leitfläche (rechts in Fig. 4) leitet eine Pflanzenstoppel 44 entfernt von diesem Spalt 43 zum Rotationskörper 24 derselben Pflanzenstoppelbearbeitungsvorrichtung 18. Dort wird sie durch den sich drehenden Rotationskörper 24 in den Spalt 43 zwischen Rotationskörper 24 und weiterer Leiteinrichtung 48 gefördert.

Wie in Fig. 4 angedeutet, haben die weiteren Leiteinrichtungen 48 - ähnlich wie die Gegenkörper 36 - jeweils eine Gegenfläche 49, die der Mantelfläche 28 des Rotationskörpers 24 in einem vorbestimmten horizontalen Abstand, der kleiner bemessen ist als ein Durchmesser der zu bearbeitenden Pflanzenstoppeln 44, gegenüber positioniert ist. Auf diese Weise können Pflanzenstoppeln 44, welche von der Leiteinrichtung 46 der benachbarten Pflanzenstoppelbearbeitungsvorrichtung 18 (in Fig. 4 nach links) zum Rotationskörper 24 geleitet werden, und Pflanzenstoppeln, welche von der weiteren Leiteinrichtung 48 weg vom Spalt 43 (in Fig. 4 nach rechts) zum Rotationskörper 24 geleitet werden, in dem Spalt 43 zwischen dem sich drehenden Rotationskörper 24 und der weiteren Leiteinrichtung 48 bearbeitet, d.h. gequetscht und/oder verdreht werden. Mit anderen Worten werden die weiteren Leiteinrichtungen 48 bei dieser Ausführungsvariante auch als eine Art Gegenkörper genutzt.

Im Übrigen entspricht das Ausführungsbeispiel von Fig. 4 dem oben anhand der Fig. 1 bis 3 beschriebenen Gerät 16.

In anderen Ausführungsformen der Erfindung können die Drehachsen 26 der Rotationskörper 24, die Mantelflächen 28 der Rotationskörper 24 und/oder die Gegenflächen 38 der Gegenkörper 36 auch in einem von 90° verschiedenen Winkel relativ zur horizontalen Ebene angestellt sein. Je nach den zu bearbeitenden Pflanzenstoppeln und den Bodenverhältnissen (insb. Unebenheiten, etc.) kann auf diese Weise die Wirksamkeit des Gerätes 16 verbessert werden.

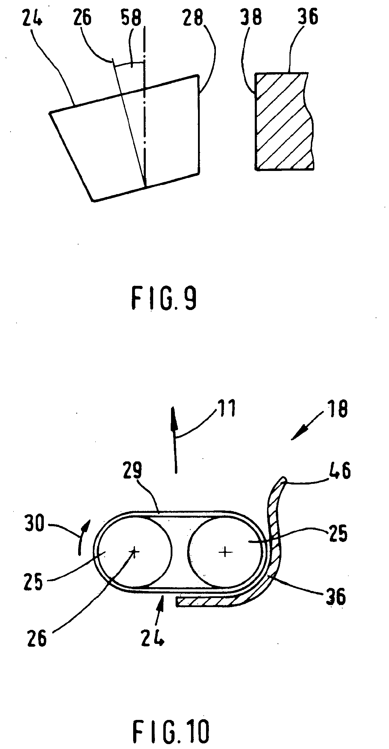

In einem speziellen Ausführungsbeispiel, welches in Fig. 9 veranschaulicht ist, ist der Rotationskörper 24, genauer sein Rotationselement 25 konisch ausgebildet. Der konische Rotationskörper 24 ist dabei so angeordnet, dass seine im Durchmesser kleinere Seite schräg nach unten (in Richtung zum Erdboden hin) zeigt. Außerdem ist die Drehachse 26 des konischen Rotationskörpers 24 relativ zur Vertikalen um einen vorbestimmten Anstellwinkel 58 von zum Beispiel etwa 5°, etwa 10°, etwa 15°, etwa 29° oder etwa 25° angestellt.

Bei dieser Ausführungsvariante ist die Umfangsgeschwindigkeit des Rotationskörpers 24 oben (d.h. im Bereich seines größeren Durchmessers) größer als unten (d.h. im Bereich seines kleineren Durchmessers. Im Ergebnis kann eine Pflanzenstoppel 44 im Spalt 43 zwischen Rotationskörper 24 und Gegenkörper 36 oben und unten im Spalt 43 verschieden gedreht werden, sodass die Pflanzenstoppel 44 stärker verdrillt werden kann.

Die Ansicht von Fig. 9, bei welcher die Mantelfläche 28 des konischen Rotationskörpers 24 an seiner dem Gegenkörper 36 zugewandten Seite im Wesentlichen vertikal verläuft, ist vorzugsweise an einer Stelle der Pflanzenstoppelbearbeitungsvorrichtung zwischen einem vorderen Spalteingangsbereich und der Durchmesserebene 32b des Rotationskörpers 24.

In weiteren Ausführungsformen der Erfindung kann das (Anbau-)Gerät 16 neben den oben beschriebenen Pflanzenstoppelbearbeitungsvorrichtungen 18 optional noch weitere Zusatzvorrichtungen aufweisen, welche ein Herausreißen der Pflanzenstoppeln aus dem Erdboden, ein Abknicken der Pflanzenstoppeln, etc. bewirken.

In der in Fig. 8 veranschaulichten Ausführungsvariante ist das Gerät 16 zum Beispiel mit einer Wurzelstock-Bearbeitungsvorrichtung 56 ausgestattet. Diese Wurzelstock-Bearbeitungsvorrichtung 56 dient dem Zerstören und/oder Herausreißen des Wurzelstockes der Pflanzenstoppel 44, falls dies nicht bereits durch die Pflanzenstoppelbearbeitungsvorrichtung 18 geschehen ist, sie kann deshalb auch als "Stockräumer" bezeichnet werden.

Die Wurzelstock-Bearbeitungsvorrichtung 56 ist zum Beispiel als Schare in Winkelform, Gänsefußform, etc., als Kufe, als drehbarer Gleitteller oder dergleichen ausgebildet und ragt zum Beispiel ein vorbestimmtes Tiefenmaß in den Erdboden hinein. Wie in Fig. 8 veranschaulicht, ist sie in der Arbeitsrichtung 11 des Gerätes 16 hinter der Drehachse 26 des Rotationskörpers 24 der Pflanzenstoppelbearbeitungsvorrichtung 18 angeordnet.

Vorzugsweise ist für jede Pflanzenstoppelbearbeitungsvorrichtung 18 wenigstens eine Wurzelstock-Bearbeitungsvorrichtung 56 vorgesehen, wobei diese in Richtung quer zur Arbeitsrichtung 11 des Gerätes 16 bevorzugt im Wesentlichen am Spalt 43 zwischen Rotationskörper 24 und Gegenkörper 36 ausgerichtet ist. Die Wurzelstock-Bearbeitungsvorrichtung 56 ist zum Beispiel an der Haltevorrichtung 20, an einem (Höhen- )Führungselement, falls vorhanden, oder an einer Pflanzenstoppelbearbeitungsvorrichtung 18 angebracht oder damit integriert.

In einer weiteren Ausführungsvariante, die in Fig. 6 veranschaulicht ist, weist die Pflanzenstoppelbearbeitungsvorrichtung 18 an ihrem Rotationskörper 24 zusätzlich wenigstens ein Räumelement 52 auf. Dieses Räumelement 52 ist an einer dem Erdboden abgewandten Seite des Rotationskörpers 24 (d.h. oben) an diesem angebracht und ragt in radialer Richtung über den Spalt 43 zwischen der Mantelfläche 28 des Rotationskörpers 24 und der Gegenfläche 38 des Gegenkörpers 36 hinweg.

Das Räumelement 52 ist beispielsweise als Stange, Leiste, Rechen, Besen, Bürsten oder dergleichen ausgestaltet. Es können ein, zwei oder mehr solcher Räumelemente 52 verteilt an dem Rotationskörper 24 vorgesehen sein.

Mit einem solchen Räumelement 52 können während des Betriebs der Pflanzenstoppelbearbeitungsvorrichtung 18 (d.h. bei drehendem Rotationskörper 24) automatisch Störkörper wie Pflanzenreste und der dergleichen von dem Gegenkörper 36 geräumt werden. Auf diese Weise kann ein Verstopfen, Zusetzen, etc. der Pflanzenstoppelbearbeitungsvorrichtung 18 im Betrieb verhindert werden, sodass eine Bearbeitung der Pflanzenstoppeln 44 ungehindert fortgesetzt werden kann.

Fig. 10 veranschaulicht ein weiteres Ausführungsbeispiel einer Pflanzenstoppelbearbeitungsvorrichtung 18 mit einer Variante des oben beschriebenen Rotationskörpers 24.

Bei dieser Variante weist der Rotationskörper 24 zwei nebeneinander angeordnete Rotationselemente 25 auf, jeweils zum Beispiel in der Form eines (Hohl-)Rades. Die beiden Rotationselemente 25 sind jeweils um eine im Wesentlichen vertikal ausgerichtete Drehachse 26 drehbar, wobei die beiden Rotationselemente 25 in der gleichen Drehrichtung 30 angetrieben werden. Ferner sind die beiden Rotationselemente 25 bevorzugt im Wesentlichen gleich ausgestaltet und dimensioniert. Ein Mantelelement 29 in Form eines Bandes, eines Riemens oder einer Kette umgreift die beiden Rotationselemente 25 und bildet so die Mantelfläche 28 dieses Rotationskörpers 24. Das Mantelelement 29 ist optional mit den oben beschriebenen Zusatzelementen ausgestattet.

Der Gegenkörper 36 ist an die größere Ausdehnung des Rotationskörpers 24 (im Vergleich zum Beispiel zu jenem in Fig. 3) angepasst. Auch können Leitelemente 46 am vorderen Endbereich der Gegenkörper 36 sowie bevorzugt auch weitere Leitelemente 48 (vgl. Fig. 4) vorgesehen sein.

Bei einem solchen Rotationskörper 24 mit zwei nebeneinander angeordneten Rotationselementen 25 können die Rotationselemente 25 wahlweise kleiner dimensioniert werden (z.B. Durchmesser im Bereich von etwa 10 bis 30 cm). Im Ergebnis können der Rotationskörper 24 und damit auch die gesamte Pflanzenstoppelbearbeitungsvorrichtung 18 in Arbeitsrichtung 11 kürzer gebaut werden.

Außerdem besteht bei einem solchen Rotationskörper 24 mit zwei Rotationselementen 25 die Möglichkeit, diese beiden Rotationselemente 25 miteinander zu koppeln und mit Hilfe nur eines gemeinsamen Antriebs anzutreiben. Im Ergebnis können der Rotationskörper 24 und damit auch die gesamte Pflanzenstoppelbearbeitungsvorrichtung zumindest in Teilbereichen flacher gebaut werden und kann deren Gewicht reduziert werden.

Während der Rotationskörper 24 der Pflanzenstoppelbearbeitungsvorrichtung 18 von Fig. 10 genau zwei Rotationselemente 25 aufweist, kann der Rotationskörper 24 alternativ auch aus drei, vier oder mehr nebeneinander angeordneten Rotationselementen 25 aufgebaut werden, die von einem gemeinsamen Mantelelement 29 umgriffen werden.

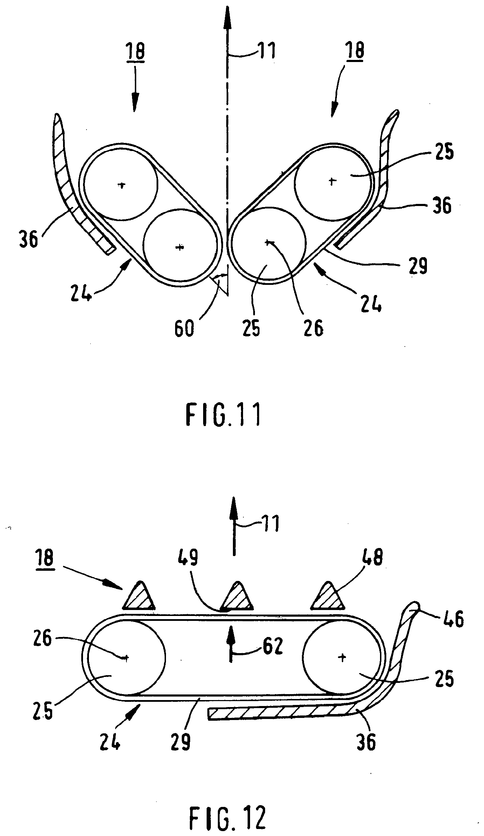

Fig. 11 veranschaulicht ein spezielles Anordnungsbeispiel von wenigstens zwei Pflanzenstoppelbearbeitungsvorrichtungen 18 in der oben beschriebenen Ausführungsvariante von Fig. 10.

Während in dem Ausführungsbeispiel von Fig. 10 die Rotationselemente 25 des Rotationskörpers 24 einer Pflanzenstoppelbearbeitungsvorrichtung 18 in einer Richtung genau quer zur Arbeitsrichtung 11, d.h. in einem Winkel von etwa 90° zur Arbeitsrichtung 11, hintereinander angeordnet sind, können die Rotationskörper 24 auch in anderen Anstellwinkeln 60 gegenüber der Arbeitsrichtung 11 ausgerichtet werden. Die bevorzugten Anstellwinkel 60 der Rotationskörper 24 gegenüber der Arbeitsrichtung 11 liegen in einem Bereich von etwa 45° bis etwa 90°.

Bei einer solchen schrägen Ausrichtung des Rotationskörpers 24 sind der Gegenkörper 36 und die (ggf. auch weiteren) Leitelemente 46, 48 in ihrer Ausgestaltung, Dimensionierung und Ausrichtung entsprechend angepasst.

Wie in Fig. 11 angedeutet, können die Rotationskörper 24 von benachbarten Pflanzenstoppelbearbeitungsvorrichtungen 18 eines Anbaugerätes 16 vorzugsweise gegenüber der Arbeitsrichtung 11 auch wechselweise angestellt werden. D.h. während ein Rotationskörper 24 in einem Anstellwinkel 60 von etwa +45° gegenüber der Arbeitsrichtung 11 ausgerichtet ist, ist der andere Rotationskörper 24 in einem Anstellwinkel 60 von etwa -45° gegenüber der Arbeitsrichtung 11 ausgerichtet.

Eine derart schräge Ausrichtung der Rotationskörper 24 kann verschiedene Vorteile bieten. So kann an dem Anbaugerät 16 selbst oder auch an der jeweiligen landwirtschaftlichen Maschine 10 eine bessere bzw. günstigere Gewichtsverteilung (insbesondere entlang der Arbeitsrichtung) erzielt werden. Die schräge Ausrichtung des Rotationskörpers 24 kann größere Rotationselemente 25 und/oder schmalere Einzugsbereiche für die Pflanzenstoppeln ermöglichen. Durch die Schrägstellung des Rotationskörpers 24 kann auch die Klemmstrecke für die Pflanzenstoppeln zwischen der Mantelfläche 28 des Rotationskörpers 24 und der Gegenfläche des Gegenkörpers 36 verlängert werden. Weiter kann auch die Gefahr einer Behinderung anderer landwirtschaftlicher Maschinen oder anderer Fahrzeuge vermindert werden.

Bei dieser Ausführungsform des Rotationskörpers 24 ist es zudem denkbar, die Pflanzenstoppelbearbeitungsvorrichtung 18 schwenkbar auszugestalten und/oder an der Haltevorrichtung 20 anzubringen. Auf diese Weise ist es möglich, die Pflanzenstoppelbearbeitungsvorrichtung 18 zwischen einer Transportstellung und einer Arbeitsstellung zu verschwenken. Während der Rotationskörper 24 der Pflanzenstoppelbearbeitungsvorrichtung 18 in der Transportstellung im Wesentlichen quer zur Arbeitsrichtung 11 ausgerichtet sein kann, kann er in der Arbeitsstellung zum Beispiel nach schräg vorne geschwenkt werden. Dadurch wird der Schwerpunkt der Pflanzenstoppelbearbeitungsvorrichtung 18 in Arbeitsrichtung 11 weiter nach vorne verlagert.

In Fig. 12 ist ein weiteres Ausführungsbeispiel der Pflanzenstoppelbearbeitungsvorrichtung 18 mit einer Variante des Rotationskörpers von Fig. 10 veranschaulicht.

Während die beiden (oder auch mehr) Rotationselemente 25 des Rotationskörpers 24 in der Ausführungsform von Fig. 10 und 11 mit einem möglichst geringen Abstand zwischen sich nebeneinander angeordnet sind, sind die Rotationselemente 25 in der Ausführungsform von Fig. 12 weiter voneinander beabstandet. Auf diese Weise kann die Arbeitsbreite einer Pflanzenstoppelbearbeitungsvorrichtung 18 quer zur Arbeitsrichtung 11 vergrößert werden, ohne deren Gewicht wesentlich erhöhen zu müssen.

Der Gegenkörper 36 ist an die größere Dimensionierung des Rotationskörpers 24 angepasst. Außerdem ist die Anzahl der weiteren Leitelemente 48 an die größere Dimensionierung des Rotationskörpers 24 angepasst.

Um auch die Gegenflächen 49 der weiteren Leitelemente 48 bei der Bearbeitung der Pflanzenstoppeln effektiv nutzen zu können, ist es von Vorteil, das Mantelelement 29 im Bereich zwischen den Rotationselementen 25 zumindest in dem in Arbeitsrichtung 11 vorderen Umlauf (oben in Fig. 12) von innen her mit einem Gegendruck 62 zu versehen. Dieser Gegendruck 62 soll verhindern, dass das Mantelelement 29 in Arbeitsrichtung nach hinten (unten in Fig. 12) ausweichen kann. Der Gegendruck 62 kann beispielsweise durch Führungselemente in Form von Rädern, Rollen, Gleitflächen, Gleitkufen und dergleichen gebildet werden.

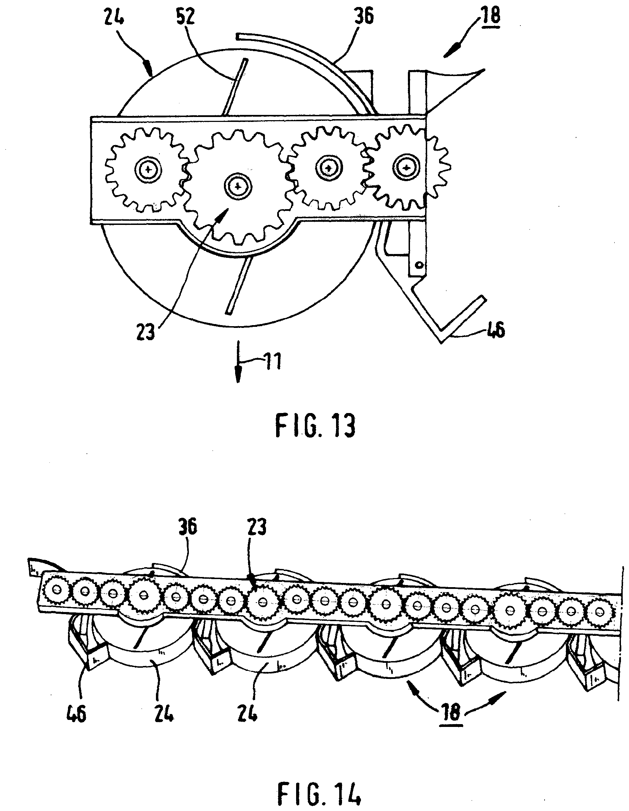

Ferner kann die Pflanzenstoppelbearbeitungsvorrichtung 18 von Fig. 12 analog zur Ausführungsform von Fig. 11 schräg angestellt werden und optional auch verschwenkbar sein. Bezug nehmend auf Fig. 13 und 14 wird ein weiteres Ausführungsbeispiel eines erfindungsgemäßen Anbaugerätes 16 erläutert.

Bei diesem Ausführungsbeispiel bilden die Pflanzenstoppelbearbeitungsvorrichtungen 18 jeweils eine Baueinheit / ein Modul, welche(s) an der (in Fig. 13 nicht dargestellten) Haltevorrichtung 20 montiert werden kann. Die einzelnen Pflanzenstoppelbearbeitungsvorrichtungen 18 sind auf diese Weise einfacher an der Haltevorrichtung 20 montierbar und können bei Bedarf einfacher ausgetauscht werden.

Außerdem sind die Rotationskörper 24 der Pflanzenstoppelbearbeitungsvorrichtungen 18 über ein gemeinsames Getriebe 23 miteinander gekoppelt, das in diesem Beispiel als ein Zahnradgetriebe ausgestaltet ist. Wahlweise können die Pflanzenstoppelbearbeitungsvorrichtungen 18 des Anbaugerätes 16 alle oder gruppenweise über gemeinsame Getriebe 23 miteinander gekoppelt sein. Das allen Rotationskörpern 24 oder einer Gruppe von Rotationskörpern 24 gemeinsame (Zahnrad-)Getriebe 23 kann wahlweise über einen oder mehrere Antriebsmotoren (z.B. elektrisch, hydraulisch) angetrieben werden.

In dem Ausführungsbeispiel von Fig. 13 und 14 sind die Rotationskörper 24 der Pflanzenstoppelbearbeitungsvorrichtungen 18 derart miteinander gekoppelt, dass die Drehrichtungen 30 der Rotationskörper 24 von benachbarten Pflanzenstoppelbearbeitungsvorrichtungen 18 gleich zueinander sind (Gleichlauf).

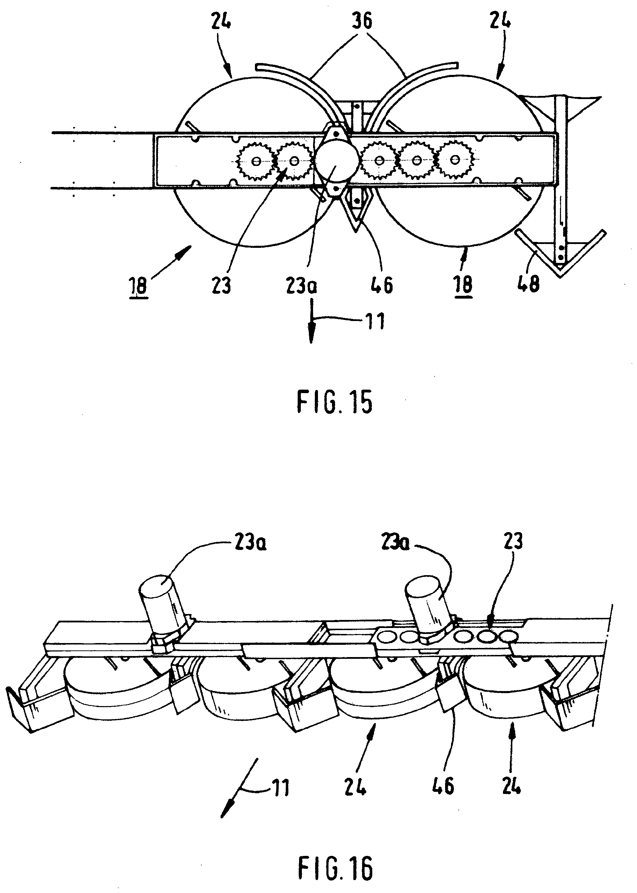

Bezug nehmend auf Fig. 15 und 16 wird ein weiteres Ausführungsbeispiel eines erfindungsgemäßen Anbaugerätes 16 erläutert.

Auch bei diesem Ausführungsbeispiel bilden die Pflanzenstoppelbearbeitungsvorrichtungen 18 jeweils eine Baueinheit / ein Modul, welche(s) an der (in Fig. 15 nicht dargestellten) Haltevorrichtung 20 montiert werden kann. Im Gegensatz zum Ausführungsbeispiel der Fig. 13 / 14 enthält hier aber eine Baueinheit zwei Pflanzenstoppelbearbeitungsvorrichtungen 18 mit jeweils einem Rotationskörper 24.

Die Rotationskörper 24 der beiden Pflanzenstoppelbearbeitungsvorrichtungen 18 einer Baueinheit sind über ein gemeinsames Getriebe 23 miteinander derart gekoppelt, dass die Drehrichtungen 30 der beiden Rotationskörper 24 entgegengesetzt zueinander sind (Gegenlauf). Außerdem wird das beiden Pflanzenstoppelbearbeitungsvorrichtungen 18 gemeinsame (Zahnrad-)Getriebe 23 über einen einzelnen Antriebsmotor 23a (z.B. elektrisch, hydraulisch) angetrieben.

Ferner sind die Gegenkörper 36 und die Leitelemente 46 entsprechend dem Gegenlauf der beiden Rotationskörper 24 symmetrisch zueinander angeordnet und ausgestaltet, wie in Fig. 15 und 16 erkennbar.

Die Pflanzenstoppelbearbeitungsvorrichtungen 18 der Ausführungsbeispiele von Fig. 13/14 bzw. 15/16 können wahlweise auch mit Rotationskörpern 24 gemäß den Ausführungsvarianten der Fig. 10-12 ausgestattet sein.

### BEZUGSZIFFERNLISTE

- 10: landwirtschaftliche Maschine, Fahrzeug
- 11: Fahrtrichtung, Arbeitsrichtung
- 12: Vorderrad
- 14: Erntevorsatzgerät, weiteres Anbaugerät
- 16: landwirtschaftliches (Anbau-)Gerät
- 18: Vorrichtung zur Bearbeitung von Pflanzenstoppeln
- 20: Haltevorrichtung
- 22: Aufhängung der Pflanzenstoppelbearbeitungsvorrichtung
- 23: Antriebsvorrichtung / Getriebe
- 23a: Antriebsmotor
- 24: Rotationskörper
- 25: Rotationselement
- 26: Drehachse des Rotationselements bzw. des Rotationskörpers
- 28: Mantelfläche des Rotationskörpers
- 29: Mantelelement
- 30: Drehrichtung des Rotationselements bzw. des Rotationskörpers
- 32a: Ebene der in Arbeitsrichtung vorderen Kante des Rotationskörpers
- 32b: Durchmesserebene des Rotationskörpers quer zur Arbeitsrichtung
- 32c: Ebene der in Arbeitsrichtung hinteren Kante des Rotationskörpers
- 34a: Durchmesserebene des Rotationskörpers in der Arbeitsrichtung
- 34b: Ebene des in Arbeitsrichtung vorderen Spalteingangs in der Arbeitsrichtung
- 34c: Ebene des Außendurchmessers des benachbarten Rotationskörpers in der Arbeitsrichtung
- 36: Gegenkörper
- 36a: verlängerter Gegenkörper
- 36b: verlängerter Gegenkörper
- 38: Gegenfläche des Gegenkörpers
- 40: Umfangsabschnitt des Rotationskörpers
- 42: Abstand zwischen Mantelfläche und Gegenfläche
- 43: Spalt zwischen Mantelfläche und Gegenfläche
- 44: Pflanzenstoppel
- 46: Leiteinrichtung
- 48: weitere Leiteinrichtung
- 49: Gegenfläche der weiteren Leiteinrichtung
- 50: Rippen, Stege an der Manteloberfläche
- 52: Räumelement
- 54: Führungselement
- 56: Wurzelstock-Bearbeitungsvorrichtung
- 58: Anstellwinkel
- 60: Anstellwinkel
- 62: Gegendruck

## Patentansprüche

1. Landwirtschaftliches Gerät (16), mit wenigstens einer Vorrichtung (18) zur Bearbeitung von Pflanzenstoppeln (44), wobei diese Pflanzenstoppelbearbeitungsvorrichtung (18) aufweist:
einen Rotationskörper (24), welcher um eine Drehachse (26) drehbar ist, wobei die Drehachse (26) des Rotationskörpers (24) in einem vorbestimmten Winkel zur horizontalen Ebene verläuft; und
einen Gegenkörper (36) mit einer Gegenfläche (38), welche dem Rotationskörper (24) in einem vorbestimmten horizontalen Abstand (42) gegenüber positioniert ist, **dadurch gekennzeichnet, dass**
der Rotationskörper (24) eine umlaufende Mantelfläche (28) aufweist; und
ein vorbestimmter horizontaler Abstand (42) zwischen der Mantelfläche (28) des Rotationskörpers (24) und der Gegenfläche (38) kleiner bemessen ist als ein Durchmesser der zu bearbeitenden Pflanzenstoppeln (44), sodass die zu bearbeitenden Pflanzenstoppeln (44) zwischen der Mantelfläche (28) des sich drehenden Rotationskörpers (24) und der Gegenfläche (38) des Gegenkörpers (36) aufgenommen und um ihre Längsachse verdreht werden.

2. Landwirtschaftliches Gerät nach Anspruch 1,
**dadurch gekennzeichnet, dass**
eine Antriebsvorrichtung zum Drehantrieb des Rotationskörpers (24) vorgesehen ist.

3. Landwirtschaftliches Gerät nach Anspruch 1 oder 2,
**dadurch gekennzeichnet, dass**
die Pflanzenstoppelbearbeitungsvorrichtung (18) eine Leiteinrichtung (46) aufweist, die dem Rotationskörper (24) in einer Arbeitsrichtung (11) des Gerätes (16) vorgeschaltet ist und ausgestaltet ist, eine zu bearbeitende Pflanzenstoppel (44) zwischen die Mantelfläche (28) des Rotationskörpers (24) und die Gegenfläche (38) des Gegenkörpers (36) zu leiten.

4. Landwirtschaftliches Gerät nach einem der vorhergehenden Ansprüche,
**dadurch gekennzeichnet, dass**
die Pflanzenstoppelbearbeitungsvorrichtung (18) wenigstens eine weitere Leiteinrichtung (48) aufweist, die in einer Arbeitsrichtung (11) des landwirtschaftlichen Gerätes (16) im Wesentlichen vor dem Rotationskörper (24) angeordnet ist und ausgestaltet ist, eine zu bearbeitende Pflanzenstoppel (44) in einer Richtung quer zur Arbeitsrichtung (11) des Gerätes (16) zu leiten.

5. Landwirtschaftliches Gerät nach einem der vorhergehenden Ansprüche,
**dadurch gekennzeichnet, dass**
eine Position der wenigstens einen Pflanzenstoppelbearbeitungsvorrichtung (18) in Richtung quer zur Arbeitsrichtung des Gerätes (16) und/oder ein Abstand zwischen zwei Pflanzenstoppelbearbeitungsvorrichtungen (18) von mehreren Pflanzenstoppelbearbeitungsvorrichtungen (18) in Richtung quer zur Arbeitsrichtung des Anbaugerätes (16) variabel einstellbar sind.

6. Landwirtschaftliches Gerät nach einem der vorhergehenden Ansprüche,
**dadurch gekennzeichnet, dass**
eine Haltevorrichtung (20) vorgesehen ist zum Montieren der wenigstens einen Pflanzenstoppelbearbeitungsvorrichtung (18) an einer landwirtschaftlichen Maschine (10) oder einem Anbaugerät (14) einer landwirtschaftlichen Maschine (10), insbesondere einem Erntegerät, oder einer selbstfahrenden Pflanzenstoppelbearbeitungsmaschine an einer Position die ausgewählt ist aus den Positionen in Fahrtrichtung (11) der Maschine vor einem Vorderrad, in Fahrtrichtung der Maschine hinter einem hinteren Rad, in Fahrtrichtung der Maschine zwischen den Rädern der Maschine, in Fahrtrichtung der Maschine vor/hinter der Maschine, in Fahrtrichtung der Maschine seitlich zur Maschine und Kombinationen aus diesen Positionen.

7. Landwirtschaftliches Gerät nach Anspruch 6,
**dadurch gekennzeichnet, dass**
die Haltevorrichtung (20) verstellbar, insbesondere höhenverstellbar an der landwirtschaftlichen Maschine (10), dem Anbaugerät (14) oder der selbstfahrenden Pflanzenstoppelbearbeitungsmaschine montierbar ist und/oder die wenigstens eine Pflanzenstoppelbearbeitungsvorrichtung (18) verstellbar, insbesondere höhenverstellbar an der Haltevorrichtung (20) angebracht ist.

8. Landwirtschaftliches Gerät nach Anspruch 6 oder 7,
**dadurch gekennzeichnet, dass**
die Pflanzenstoppelbearbeitungsvorrichtungen (18) als Baueinheiten an der Haltevorrichtung (20) befestigbar sind, wobei jede Baueinheit ein, zwei oder mehr Pflanzenstoppelbearbeitungsvorrichtungen (18) mit einer gemein-samen Antriebsvorrichtung (23) aufweist.

9. Landwirtschaftliches Gerät nach einem der vorhergehenden Ansprüche,
**dadurch gekennzeichnet, dass**
die Mantelfläche (28) des Rotationskörpers (24) und/oder die Gegenfläche (38) des Gegenkörpers (36) wenigstens eine Zusatzeinrichtung aufweisen, die ausgewählt ist aus Reibflächen, Oberflächenprofilen (50), Schneidelementen und Reißelementen.

10. Landwirtschaftliches Gerät nach einem der vorhergehenden Ansprüche,
**dadurch gekennzeichnet, dass**
der Gegenkörper (36) und/oder der Rotationskörper (24) in horizontaler Richtung federnd gelagert sind und in Richtung auf die jeweils andere Komponente des Gegenkörpers (36) und des Rotationskörpers (24) vorgespannt sind.

11. Landwirtschaftliches Gerät nach einem der vorhergehenden Ansprüche,
**dadurch gekennzeichnet, dass**
ein Spalt (43) zwischen der Mantelfläche (28) des Rotationskörpers (24) und der Gegenfläche (38) des Gegenkörpers (36) in Richtung nach unten hin weiter wird.

12. Landwirtschaftliches Gerät nach einem der vorhergehenden Ansprüche,
**dadurch gekennzeichnet, dass**
der Rotationskörper (24) der Pflanzenstoppelbearbeitungsvorrichtung (18) wenigstens zwei Rotationselemente (25), die nebeneinander angeordnet sind und deren Drehrichtungen gleich sind, und ein die wenigstens zwei Rotationselemente (25) umgreifendes Mantelelement (29) zum Bilden der Mantelfläche (28) des Rotationskörpers aufweist.

13. Landwirtschaftliche Maschine (10) mit einem Anbaugerät, welches als ein landwirtschaftliches Gerät (16) nach einem der Ansprüche 1 bis 12 ausgestaltet ist.

14. Landwirtschaftliche Maschine (10) mit einem Erntegerät (14) und einem Anbaugerät, welches als ein landwirtschaftliches Gerät (16) nach einem der Ansprüche 1 bis 12 ausgestaltet ist.

15. Selbstfahrende Pflanzenstoppelbearbeitungsmaschine mit einem landwirtschaftlichen Gerät (16) nach einem der Ansprüche 1 bis 12.

16. Verfahren zur Bearbeitung von Pflanzenstoppeln (44) auf einem Feld, bei welchem die Pflanzenstoppeln (44) zwischen einer Mantelfläche (28) eines sich drehenden Rotationskörpers (24), wobei eine Drehachse (26) des Rotationskörpers (24) in einem vorbestimmten Winkel zur horizontalen Ebene des Feldes verläuft, und einer Gegenfläche (38) eines Gegenkörpers (36) aufgenommen und um ihre Längsachse verdreht und/oder gequetscht werden.

## Claims

1. An agricultural appliance (16) having at least one device (18) for treating plant stubbles (44), wherein this plant stubble treating device (18) comprises:
a rotary body (24) which is rotatable about an axis of rotation (26), wherein said axis of rotation (26) of said rotary body (24) runs in a predetermined angle relative to the horizontal plane; and
a counter body (36) having a counter surface (38) positioned opposite to said rotary body (24) in a predetermined horizontal distance (42) thereto,
**characterized in that**
said rotary body (24) comprises a circumferential lateral surface (28); and
a predetermined horizontal distance (42) between said lateral surface (28) of said rotary body (24) and said counter surface (38) is dimensioned smaller than a diameter of the plant stubbles (44) to be treated so that the plant stubbles (44) to be treated are received between said lateral surface (28) of said rotating rotary body (24) and said counter surface (38) of said counter body (36) and twisted about their longitudinal axis.

2. The agricultural appliance according to claim 1,
**characterized in that**
there is provided a driving device for rotary driving said rotary body (24).

3. The agricultural appliance according to claim 1 or 2,
**characterized in that**
said plant stubble treating device (18) comprises a guiding device (46) which is upstream of said rotary body (24) in a working direction (11) of said appliance (16) and designed to guide a plant stubble (44) to be treated between said lateral surface (28) of said rotary body (24) and said counter surface (38) of said counter body (36).

4. The agricultural appliance according to any one of preceding claims,
**characterized in that**
said plant stubble treating device (18) comprises at least one further guiding device (48) which is arranged substantially in front of said rotary body (24) in a working direction (11) of said agricultural appliance (16) and designed to guide a plant stubble (44) to be treated in a direction transverse to said working direction (11) of said appliance (16).

5. The agricultural appliance according to any one of preceding claims,
**characterized in that**
a position of said at least one plant stubble treating device (18) is variably adjustable in the direction transverse to said working direction of said appliance (16) and/or a distance between two plant stubble treating devices (18) of a plurality of plant stubble treating devices (18) is variably adjustable in the direction transverse to said working direction of said appliance (16).

6. The agricultural appliance according to any one of preceding claims,
**characterized in that**
there is provided a supporting device (20) for mounting said at least one plant stubble treating device (18) on an agricultural machine (10) or a mounted device (14) of an agricultural machine (10), in particular a harvester, or a self-driving plant stubble treating machine at a position which is selected from the positions in front of a front wheel in the driving direction (11) of the machine, behind a rear wheel in the driving direction of the machine, between the wheels of the machine in the driving direction of the machine, in front of / behind the machine in the driving direction of the machine, sidewards to the machine in the driving direction of the machine, and combinations of these positions.

7. The agricultural appliance according to claim 6,
**characterized in that**
said supporting device (20) is adjustably, in particular height adjustably, mountable on the agricultural machine (10), the mounted device (14) or the self-driving plant stubble treating machine, and/or said at least one plant stubble treating device (18) is adjustably, in particular height adjustably, mounted on said supporting device (20).

8. The agricultural appliance according to claim 6 or 7,
**characterized in that**
said plant stubble treating devices (18) are mountable on said supporting device (20) as modular units, wherein each modular unit comprises one, two or more plant stubble treating devices (18) with a common driving device (23).

9. The agricultural appliance according to any one of preceding claims,
**characterized in that**
said lateral surface (28) of said rotary body (24) and/or said counter surface (38) of said counter body (36) comprise at least one additional means which is selected from friction surfaces, surface profiles (50), cutting elements and tearing elements.

10. The agricultural appliance according to any one of preceding claims,
**characterized in that**
said counter body (36) and/or said rotary body (24) are resiliently mounted in the horizontal direction and biased in the direction towards the respective other component of said counter body (36) and said rotary body (24).

11. The agricultural appliance according to any one of preceding claims,
**characterized in that**
a gap (43) between said lateral surface (28) of said rotary body (24) and said counter surface (38) of said counter body (36) enlarges in the downwards direction.

12. The agricultural appliance according to any one of preceding claims,
**characterized in that**
said rotary body (24) of said plant stubble treating device (18) comprises at least two rotary elements (25) arranged next to each other and having the same direction of rotation, and an encasing element (29) encompassing said at least two rotary elements (25) for forming said lateral surface (28) of said rotary body.

13. An agricultural machine (10) comprising a mounted device designed as an agricultural appliance (16) according to any one of claims 1 to 12.

14. An agricultural machine (10) comprising a harvester (14) and a mounted device designed as an agricultural appliance (16) according to any one of claims 1 to 12.

15. A self-driving plant stubble treating machine comprising an agricultural appliance (16) according to any one of claims 1 to 12.

16. A method for treating plant stubbles (44) on a field, in which the plant stubbles (44) are received between a lateral surface (28) of a rotating rotary body (24) having an axis of rotation (26) running in a predetermined angle relative to the horizontal plane of the field and a counter surface (38) of a counter body (36) and are twisted about their longitudinal axis and/or squeezed.

## Revendications

1. Appareil agricole (16) comprenant au moins un dispositif (18) pour traiter des chaumes végétaux (44), dans lequel ce dispositif de traitement des chaumes végétaux (18) comprend :
un corps rotatif (24) pouvant tourner autour d'un axe de rotation (26), dans lequel l'axe de rotation (26) du corps rotatif (24) forme un angle prédéterminé par rapport au plan horizontal ; et
un contre-corps (36) comprenant une contre-surface (38) qui est positionnée en face du corps rotatif (24) à une distance horizontale prédéterminée (42),
**caractérisé en ce que**
le corps rotatif (24) comprend une surface d'enveloppe (28) périphérique ; et
une distance horizontale prédéterminée (42) entre la surface d'enveloppe (28) du corps rotatif (24) et la contre-surface (38) est d'une dimension inférieure à un diamètre des chaumes végétaux (44) à traiter de telle sorte que les chaumes végétaux (44) à traiter sont reçus entre la surface d'enveloppe (28) du corps rotatif (24) en rotation et la contre-surface (38) du contre-corps (36) et sont torsadés autour de leur axe longitudinal.

2. Appareil agricole selon la revendication 1,
**caractérisé en ce qu'**
est prévu un dispositif d'entraînement pour l'entraînement en rotation du corps rotatif (24).

3. Appareil agricole selon la revendication 1 ou 2,
**caractérisé en ce que**
le dispositif de traitement des chaumes végétaux (18) comprend un dispositif de guidage (46) qui est monté en amont du corps rotatif (24) dans une direction de travail (11) de l'appareil (16) et est configuré pour guider un chaume végétal (44) à traiter entre la surface d'enveloppe (28) du corps rotatif (24) et la contre-surface (38) du contre-corps (36).

4. Appareil agricole selon l'une des revendications précédentes,
**caractérisé en ce que**
le dispositif de traitement des chaumes végétaux (18) comprend au moins un dispositif de guidage supplémentaire (48) qui est disposé essentiellement devant le corps rotatif (24) dans une direction de travail (11) de l'appareil agricole (16) et est configuré pour guider un chaume végétal (44) à traiter dans une direction transversale à la direction de travail (11) de l'appareil (16).

5. Appareil agricole selon l'une des revendications précédentes,
**caractérisé en ce qu'**
une position dudit au moins un dispositif de traitement des chaumes végétaux (18) dans une direction transversale à la direction de travail de l'appareil (16) et/ou une distance entre deux dispositifs de traitement des chaumes végétaux (18) parmi plusieurs dispositifs de traitement des chaumes végétaux (18) dans une direction transversale à la direction de travail de l'appareil (16) peuvent être réglées de manière variable.

6. Appareil agricole selon l'une des revendications précédentes,
**caractérisé en ce qu'**
est prévu un dispositif de support (20) pour monter ledit au moins un dispositif de traitement des chaumes végétaux (18) sur une machine agricole (10) ou sur un appareil porté (14) d'une machine agricole (10), en particulier un appareil à moissonner, ou sur une machine de traitement des chaumes végétaux automotrice à une position qui est sélectionnée parmi les positions : devant une roue avant dans la direction de travail (11) de la machine, derrière une roue arrière dans la direction de travail (11) de la machine, entre les roues de la machine dans la direction de travail (11) de la machine, devant / derrière la machine dans la direction de travail (11) de la machine, sur un côté de la machine dans la direction de travail (11) de la machine, et parmi des combinaisons de ces positions.

7. Appareil agricole selon la revendication 6,
**caractérisé en ce que**
le dispositif de support (20) peut être monté de manière ajustable, en particulier ajustable en hauteur, sur la machine agricole (10), l'appareil porté (14) ou la machine de traitement des chaumes végétaux automotrice, et/ou ledit au moins un dispositif de traitement des chaumes végétaux (18) est monté de manière ajustable, en particulier ajustable en hauteur, sur le dispositif de support (20).

8. Appareil agricole selon la revendication 6 ou 7,
**caractérisé en ce que**
les dispositifs de traitement des chaumes végétaux (18) en tant qu'unités modulaires peuvent être fixés au dispositif de support (20), dans lequel chaque unité modulaire comprend un, deux ou plus de deux dispositifs de traitement des chaumes végétaux (18) comprenant un dispositif d'entraînement (23) commun.

9. Appareil agricole selon l'une des revendications précédentes,
**caractérisé en ce que**
la surface d'enveloppe (28) du corps rotatif (24) et/ou la contre-surface (38) du contre-corps (36) comprennent au moins un dispositif supplémentaire qui est sélectionné parmi des surfaces de frottement, des profils de surface (50), des éléments de coupe et des éléments de déchirement.

10. Appareil agricole selon l'une des revendications précédentes,
**caractérisé en ce que**
le contre-corps (36) et/ou le corps rotatif (24) sont montés de manière élastique dans la direction horizontale et sont précontraints dans la direction des autres composants respectifs du contre-corps (36) et du corps rotatif (24).

11. Appareil agricole selon l'une des revendications précédentes,
**caractérisé en ce qu'**
un espace (43) entre la surface d'enveloppe (28) du corps rotatif (24) et la contre-surface (38) du contre-corps (36) s'élargit vers le bas.

12. Appareil agricole selon l'une des revendications précédentes,
**caractérisé en ce que**
le corps rotatif (24) du dispositif de traitement des chaumes végétaux (18) comprend au moins deux éléments rotatifs (25) qui sont disposés l'un à côté de l'autre et ont un même sens de rotation, et un élément d'enveloppe (29) entourant lesdits au moins deux éléments rotatifs (25) afin de former la surface d'enveloppe (28) du corps rotatif.

13. Machine agricole (10) comprenant un appareil porté configuré comme un appareil agricole (16) selon l'une des revendications 1 à 12.

14. Machine agricole (10) comprenant un appareil à moissonner (14) et un appareil porté configuré comme un appareil agricole (16) selon l'une des revendications 1 à 12.

15. Machine de traitement des chaumes végétaux automotrice comprenant un appareil agricole (16) selon l'une des revendications 1 à 12.

16. Procédé de traitement des chaumes végétaux (44) sur un champ, dans lequel les chaumes végétaux (44) sont reçus entre une surface d'enveloppe (28) d'un corps rotatif (24) en rotation, lequel a un axe de rotation (26) qui forme un angle prédéterminé par rapport au plan horizontal du champ, et une contre-surface (38) d'un contre-corps (36), et sont torsadés autour de leur axe longitudinal et/ou pressés.
